# EUROPEAN PATENT APPLICATION

(11) **EP 1 607 341 A1**
(43) Date of publication of application: **21.12.2005**
(21) Application number: 04704727.9
(22) Date of filing: 23.01.2004
(51) Int. Cl.: B65D 39/16, B65D 17/32, B29C 45/14, B29C 43/00

(54) **EASILY OPENABLE CONTAINER LID WITH RESEALABILITY AND METHOD OF PRODUCING THE SAME**

(30) Priority: 24.01.2003 JP 2003015840; 19.09.2003 JP 2003327152; 19.09.2003 JP 2003327153; 19.09.2003 JP 2003327154; 16.01.2004 JP 2004008647
(71) Applicant: TOYO SEIKAN KAISYA, LTD., Tokyo 100-0011 (JP)
(72) Inventor: SHIBASAKA, Mamoru, c/o Toyo Seikan kaisha, LTD, Yokohama-shi, Kanagawa 230-0001 (JP); OSAFUNE, Tatsuya, c/o Toyo Seikan kaisha, LTD, Yokohama-shi, Kanagawa 230-0001 (JP); IMODA, Daisuke, c/o Toyo Seikan Kaisha, LTD, Yokohama-shi, Kanagawa 230-0047 (JP)
(74) Representative: Manley, Nicholas Michael
(86) International application number: PCT/JP2004/000571
(87) International publication number: WO 2004/065241

(57) **Abstract**

An easily unsealable container closure having re-sealing performance and comprising a closure member having an opening portion that has been formed in advance, and an unsealing tab which is so fitted to the outer surface side of the closure member as to cover the opening portion and is hermetically adhered to the periphery of the opening portion, wherein the unsealing tab includes a flexible tab member and a plug member integrally adhered to the tab member and is so formed as to be fitted to the opening portion of the closure member, and the flexible tab member is hermetically fixed to the periphery of the opening portion in the closure member so as to be torn off. The container closure offers re-sealing performance which can be repetitively effected to temporarily seal again the once unsealed opening, and further offers excellent re-sealing performance, unseal indication function and easy-to-unseal performance.

## Description

### (Technical Field)

The present invention relates to an easily unsealable container closure and a method of producing the same. More particularly, the invention relates to an easily unsealable container closure which is a partially unsealable container closure having re-sealing performance enabling the opening to be temporarily sealed again such as enabling the opening that is once unsealed to be temporarily sealed again and to a method of producing the same.

### (Background Art)

Easily unsealable container closures (easy-open lids) have been widely used as food container closures such as of food cans and beverage cans, and can be classified into the container closures of the partially opening type which are chiefly used as closures for beverage cans for containing various kinds of beverages such as coke, beer, juices, etc. and the container closures of the fully opening type which are chiefly used as closures for canned foods and cans containing instant noodles, snack cookies, etc.

The container closures of the partially opening type can be further divided into those of the pull-top tab type permitting the easily torn and opened pieces to be pulled off and completely separated away from the container closures when unsealed and those of the stay-on tab type enabling the easily torn and opened pieces to be pushed into containers being partly maintained coupled to the container closures without permitting the torn and opened pieces to be separated away from the container closures even after the containers are unsealed.

However, the container closures of the so-called pull-top tab type which permit the opened pieces to be completely separated away from the container closures could become not only trash to contaminate the environment but also possess sharp broken surfaces at the opened and separated pieces. In recent years, therefore, the container closures of the stay-on tab type free of the above problem have been much used.

It is strongly desired that the container closures must be easily unsealable, must maintain intimate sealing and, depending upon the properties of the contents, must withstand the inner pressure, must be corrosion resistant, and must not elute into the contents.

So far, therefore, there has been much used a laminated member having a high strength, rich flexibility and excellent corrosion resistance and, particularly, a closure body or a tab of a laminated material obtained by coating a substrate such as a metal foil or a thin resin plate with a non-eluting resin.

For example, JP-A-11-011526 discloses an easily unsealable closure body obtained by adhering a laminate having heat-sealing property on a substrate (thermoplastic resin) that becomes the closure body having an opening via an adhesive layer in a manner that the adhering strength of the laminate is greater than the adhering strength among the layers of the laminate and that the tensile strength of the adhered layers is smaller than the adhering strength among the layers of the laminate in order to accomplish easily opening performance, excellent barrier property and to increase the strength against the inner pressure.

Further, JP-B-60-1216 discloses an easily unsealable container closure obtained by heat-adhering an opening piece of a metal foil laminate coated with a resin on both surfaces thereof onto a resin-coated metal closure member having an opening formed therein in advance and of which the peripheral edges of the opening are protected with a coating in a particular structure.

### (Disclosure of the Invention)

In quite recent years where the container closures having the partially open stay-on tab are generally used, however, it has been very demanded to provide an easily unsealable container closure which is capable of temporarily sealing the container again such as imparting the re-sealing performance to the container closure and lightly and temporarily closing again the opening that was once unsealed.

However, it is a widely accepted common sense that the easily unsealable containers are discarded after they are used only once and, hence, the closure is unsealed only once. It is not too much to say that re-sealing the container closure after it is once unsealed had not at all been considered so far.

In fact, the present inventors have searched the patent applications but could not find any proposal related to the easily unsealable container closure designed to be sealed again after it was once unsealed.

Besides, to safely and reliably re-seal the container closure without substantially permitting the contents to be leaked, it is particularly important to accomplish the sealing of the opening to some extent, still enabling the closure that has not been unsealed yet to be easily distinguished from the closure that was once unsealed and sealed again to guarantee that the content in the container has not been exchanged unnoticed from the standpoint of preventing mischievous prank and crime.

With the conventional resin-coated metal foil tab or the opened piece described above, the sealing is not almost accomplished even if it is attempted to re-seal the opening or, even if the re-sealing is accomplished, the already unsealed state is not distinguished from the not yet unsealed state, and it is difficult to accomplish the above object to a sufficient degree.

In order to solve the above problem, the present inventors have conducted keen study, have found the fact that the re-sealing can be accomplished to a sufficient degree and the unsealed state can be easily distinguished from the not yet unsealed state by providing an unsealing tab which is the unsealing piece having a plug member that can be fitted to the opening of the closure member, and have finished the present invention based on the above discovery.

It is therefore an object of the present invention to provide an easily unsealable container closure having re-sealing performance and, particularly, an easily unsealable container closure with a partially open type stay-on tab having an unsealed opening re-sealing performance capable of repetitively sealing the once unsealed opening again temporarily, featuring markedly superior re-sealing performance to those of the type covering the opening relying on the resin-coated tab only.

Another object of the present invention is to provide an easily unsealable container closure further having an unsealing indication function enabling the closure that is at least unsealed once and is, thereafter, sealed again to be easily distinguished from the unsealed closure to guarantee that the contents in the can has not been exchanged unnoticed.

A further object of the present invention is to provide a container closure capable of forming an easily unsealable container featuring greatly increased pressure resistance and falling strength compared to the conventional counterparts.

A still further object of the present invention is to provide an easily unsealable container closure effectively preventing an adhesive resin or an adhesive agent from protruding at the time when an unsealing tab is adhered and fastened to the closure member, and exhibiting excellent appearance and touch feeling of the opening portion for drinking.

A yet further object of the present invention is to provide a container closure that offers markedly improved unsealing performance.

A further object of the present invention is to provide a hygienically excellent easily unsealable container without permitting the opening piece to enter into the can unlike the conventional container closures with a stay-on tab.

Another object of the present invention is to provide a method of producing an easily unsealable container having re-sealing performance.

According to the present invention, there is provided an easily unsealable container closure having re-sealing performance and comprising a closure member having an opening portion that has been formed in advance, and an unsealing tab which is so fitted to the outer surface side of the closure member as to cover the opening portion and is hermetically adhered to the periphery of the opening portion, wherein the unsealing tab includes a flexible tab member and a plug member integrally adhered to the tab member and is so formed as to be fitted to the opening portion of the closure member, and the flexible tab member is hermetically fixed to the periphery of the opening portion in the closure member so as to be torn off.

In the easily unsealable container closure of the present invention, the unsealing tab includes the flexible tab member and the plug member, the plug member being formed in such a shape that is fitted to the opening portion in the closure member and is integrally adhered to the tab member, while the flexible tab member is hermetically adhered onto the periphery of the opening of the closure member in a manner that it can be torn off.

With the unsealing tab having the above-mentioned particular structure, the easily unsealable container closure can be easily and temporarily sealed many times even after it is once unsealed by pushing the plug onto the opening portion, and offers re-sealing performance very superior to the case where the opening portion is covered with the conventional resin film-coated metal foil tab (tape tab) only. Besides, the adhering area of the unsealing portion is small covering the peripheral edge portion only of the opening, and the adhering strength is selected to be relatively small to improve the unsealing performance.

The container closure further has an unsealing indication function which enables the closure that was once unsealed and was, thereafter, re-sealed to be distinguished from the unsealed closure and, if once unsealed, indicates that the container closure was once unsealed.

Owing to the particular constitution of the above easily unsealable container closure, further, the container exhibits markedly increased pressure resistance and falling strength as compared to those of the conventional counterparts.

Further, the shape as a whole is flat without conspicuous ruggedness in the up-and-down direction. Even when the closures of the invention are stacked in many number, therefore, relatively high stability is maintained offering the so-called excellent stacking performance accounting for many of the advantages of the invention.

In the easily unsealable container closure of the present invention, it is desired that the edge of the opening portion is treated by being folded or curled toward the outer side of the closure or by being coated with a coating material or a resin. Therefore, the edge of the opening after unsealed does not become sharp and is protected from the corrosion. The edge that is treated fits well to the plug member of the unsealing tab and does not damage the plug member even after re-sealed repetitively. Therefore, the fitted state is favorably maintained for extended periods of time.

It is desired that the flexible tab member comprises a laminate obtained by forming a resin film on both surfaces of a metal foil, such as a laminate of a biaxially drawn polyethylene terephthalate layer/an aluminum layer/a sealant film, the layers being dry-laminated by using an urethane adhesive, from the standpoint of balance between the tensile strength at the time of tearing the tab off and the flexibility, and corrosion resistance.

It is desired that the closure member is made of a metal member having double seamed portions along the peripheral edge thereof. It is further desired that the outer surface side of the closure member can be at least heat-adhered to the flexible tab member, but the inner surface side thereof adheres to neither the flexible tab member nor the plug member from the standpoint of maintaining both intimate adhesion to the flexible tab member and to the plug member, and inhibiting elution into the content.

It is desired that the unsealing tab is such that not only the flexible tab member but also the plug member are adhered to the periphery of the opening of the closure member from the standpoint of maintaining intimate sealing of the container that is subject to be exposed to severe conditions such as high temperatures and shocks.

It is desired that the container closure has the unsealing tab with a portion adhered to the closure member in a manner that it can be torn off with difficulty at a position on the side opposite to the unsealing start end with the opening portion held therebetween, and that the unsealing tab is not torn off from the closure member even after the unsealing. In particular, the container closure has the unsealing tab that is cut away at a portion just before the portion that is adhered to the closure member from both sides thereof in a direction nearly at right angles with the tearing direction to assume such a shape that the tab width is narrowed at the above portion, since the tearing can be easily stopped at the above portion.

In the easily unsealable container closure of the invention, it is desired that the flexible tab member is adhered and fixed to the outer surface side of the closure member, and includes a sealing portion to which the plug member is adhered integrally together and a folding portion continuing to the sealing portion at a sealing start end of the sealing portion, the folding portion having a grip portion for unsealing and being fixed to the sealing portion or the closure member before being unsealed.

In particular, the folding portion is adhered and fixed to the sealing portion or to the outer surface of the closure member except at least the grip portion and, after unsealed, the folding portion is prevented from being fixed to the sealing portion or the closure member. For example, the folding portion is torn off the sealing portion or the outer surface of the closure member to where it had been adhered and fixed, and the folding portion or the sealing portion is partly torn off, enabling a person to know at a glance that the container closure is once unsealed, exhibiting a vivid unsealing indication function.

Further, the flexible tab member has an adhesive layer formed on the surface thereof on the side that is adhered to the closure member, and the end of the folding portion is folded or curled toward the side of the closure member so as to be adhered and fixed, enabling the sealing portion and the folding portion to be easily adhered and fixed, eliminating the step of separately applying the adhesive and featuring excellent productivity. There is further obtained an advantage of preventing the adhesive resin or the adhesive agent from protruding beyond the folded portion.

The flexible tab member is adhered and fixed to the closure member, and the end of the periphery of the opening portion is folded toward the side of the closure member. Therefore, the adhesive resin or the adhesive agent does not protrude outward beyond the folded portion. Namely, the adhesive resin or the adhesive agent does not remain like stripes on the closure member after unsealed, enabling the appearance to be improved and the touch feeling of the opening portion to be improved when a person drinks with his mouth in direct touch with the closure member.

A vent hole is formed in advance in the closure member, the folding portion is adhered and fixed to the outer surface side of the closure member so as to seal at least the vent hole, and when the folding portion is torn off from the side of the outer surface of the closure member, the vent hole is opened earlier than the opening portion. Even when the content produces a positive pressure in the container like the case of carbonated beverages, therefore, the vent hole is opened first effectively preventing the content from gushing out.

In the easily unsealable container closure of the invention, further, the adhesion between the sealing portion and the closure member is torn off or is weakened near both ends of the folding line which is a boundary line between the sealing portion and the folding portion of the flexible tab member prior to pulling the plug member from the opening portion. For example, the flexible tab member has the sealing portion and the folding portion that are adhered and fixed together near both ends of the folding line. This tears off the adhesion of the sealing portion near the portion where the plug member starts being pulled earlier than the pulling of the plug member, enabling the flexible tab member to be torn off with a decreased force at the time of pulling the plug member and, hence, requiring a generally decreased force for the unsealing.

In the easily unsealable container of the present invention, it is desired that the plug member is a plastic plug member formed by the injection forming or the compression forming, or is a metal plug member formed by the press forming. In particular, it is desired that the plastic plug member is made of a resin composition of an olefin resin and at least the one selected from a thermoplastic elastomer and a rubbery composition, having a heptane elution amount at 25°C of not larger than 150 ppm, a deformation ratio (JIS K 6723) at 100°C of smaller than 30%, and a compressive permanent strain (JIS K 6262) at 70°C of in a range of 50 to 95%, making it possible to maintain the sealing at the time of high-temperature filling or retort sterilization and, further, imparting repetitive elasticity necessary for the re-sealing after the container closure is unsealed.

It is desired that the hardness at normal temperature of the resin composition constituting the plug member is in a range of 80 to 95 as measured by using a type-A durometer indentater and is in a range of 50 to 75 as measured by using a type-D durometer indentater in compliance with a cured rubber permanent strain testing method (JIS K 6262) from the standpoint of holding the shape against the deforming stress in case the container falls down and against the stress due to the pushing force, and retaining the re-sealing performance.

According to the present invention, further, there is provided a method of producing an easily unsealable container closure comprising the steps of treating an edge of an opening of a closure member having the opening portion that has been formed in advance, forming an unsealing tab by integrating a flexible tab member and a plug member together, and adhering the flexible tab member to the outer surface of the closure member in the periphery of the opening by applying the unsealing tab onto the surface that becomes the outer surface side of the closure member.

In the method of producing an easily unsealable container closure of the present invention, it is particularly desired that the unsealing tab is formed by integrally forming the plug member by the injection forming or by the compression forming on the flexible tab member from the standpoint of correctly and efficiently forming the unsealing tab.

According to the present invention, there is further provided a method of producing an easily unsealable container closure comprising the steps of treating an edge of an opening of a closure member having the opening portion that has been formed in advance, forming a flexible tab member and a plug member, and placing the flexible tab member and the plug member on the outer surface of the closure member such that the plug member is fitted to the opening of the closure member and the flexible tab member covers the plug member, enabling the flexible tab member and the plug member to be integrally adhered together thereby to form an unsealing tab and, at the same time, adhering the flexible tab member to the outer surface of the closure member.

### (BRIEF DESCRIPTION OF THE DRAWINGS)

Fig. 1 is a perspective view illustrating principal constituent members of a container closure of the present invention;
Fig. 2 is a perspective view illustrating a state where the container closure of Fig. 1 is unsealed after it has been finished;
Fig. 3 is a perspective view illustrating principal constituent members of the container closure according to another embodiment of the invention;
Fig. 4 is a perspective view illustrating, in cross section, the structure in a state where the container closure of Fig. 3 is unsealed after it has been finished;
Fig. 5 is a view illustrating a container closure of the present invention using a plastic plug, wherein Fig. 5(a) is a plan view, Fig. 5(b) is a sectional view, and Fig. 5(c) is a partial view on an enlarged scale;
Fig. 6 is a view illustrating another container closure of the present invention using a plastic plug, wherein Fig. 6(a) is a plan view, Fig. 6(b) is a sectional view, and Fig. 6(c) is a partial view on an enlarged scale;
Fig. 7 is a view illustrating a container closure of the present invention using a metal plug, wherein Fig. 5(a) is a plan view, Fig. 5(b) is a sectional view, and Fig. 5(c) is a partial view on an enlarged scale;
Fig. 8 is a view illustrating another container closure of the present invention using a metal plug, wherein Fig. 5(a) is a plan view, Fig. 5(b) is a sectional view, and Fig. 5(c) is a partial view on an enlarged scale;
Fig. 9 is a perspective view of the container closure of the invention of an embodiment featuring particularly excellent unseal indicating function;
Fig. 10 is a sectional view illustrating a portion X of Fig. 9 on an enlarged scale;
Fig. 11 is a sectional view illustrating another embodiment of the portion X of Fig. 9 on an enlarged scale;
Fig. 12 is a sectional view illustrating a further embodiment of the portion X of Fig. 9 on an enlarged scale;
Fig. 13 is a sectional view illustrating a still further embodiment of the portion X of Fig. 9 on an enlarged scale;
Fig. 14 is a sectional view illustrating a yet further embodiment of the portion X of Fig. 9 on an enlarged scale;
Fig. 15 is a perspective view illustrating the container closure of the invention of an embodiment provided with a vent hole;
Fig. 16 is a plan view illustrating a further embodiment in which the position of the vent hole is different from that of Fig. 15;
Fig. 17 is a plan view illustrating a still further embodiment in which the position of the vent hole is different from that of Fig. 15;
Fig. 18 is a plan view of the container closure of an embodiment featuring particularly excellent unsealing performance according to the present invention;
Fig. 19 is a chart showing the force needed for the initial unsealing operation;
Fig. 20 is a plan view illustrating a flexible tab member of the embodiment shown in Fig. 18;
Fig. 21 is a view illustrating another flexible tab member;
Fig. 22 is a view illustrating a further flexible tab member;
Fig. 23 is a view illustrating a still further flexible tab member;
Fig. 24 is a view illustrating in cross section a portion of the container closure of Fig. 4 on an enlarged scale;
Fig. 25 is a sectional view schematically illustrating the treatment of an edge of an opening by coating the closure member with a resin according to the invention;
Fig. 26 is a view of steps illustrating a method of producing the container closure using the plastic plug of the present invention;
Fig. 27 is a view of steps illustrating another method of producing the container closure using the plastic plug of the present invention;
Fig. 28 is a view of steps illustrating a further method of producing the container closure using the plastic plug of the present invention;
Fig. 29 is a view of steps illustrating a still further method of producing the container closure using the plastic plug of the present invention;
Fig. 30 is a view of steps illustrating a method of producing the container closure using a metal plug of the present invention;
Fig. 31 is a view of steps illustrating another method of producing the container closure using the metal plug of the present invention;
Fig. 32 is a view of steps illustrating a method of producing a flexible tab member of the invention;
Fig. 33 is a view of steps illustrating a treating method by folding the edge of the opening in the container closure of the invention (plastic plug);
Fig. 34 is a view of steps illustrating another treating method by folding the edge of the opening in the container closure of the invention (plastic plug);
Fig. 35 is a view of steps illustrating a treating method by folding the edge of the opening in the container closure of the invention (metal plug); and
Fig. 36 is a view of steps illustrating a treating method by folding the edge of the opening in the container closure of the invention (metal plug).

### (Best Mode for Carrying Out the Invention)

### (Basic embodiment of an easily unsealable container closure)

A basic embodiment of an easily unsealable container closure having re-sealing performance of the invention will now be described in detail with reference to the drawings.

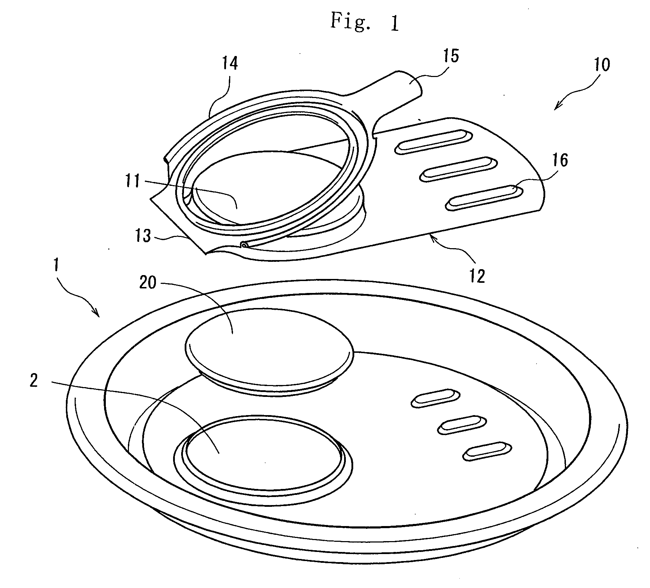

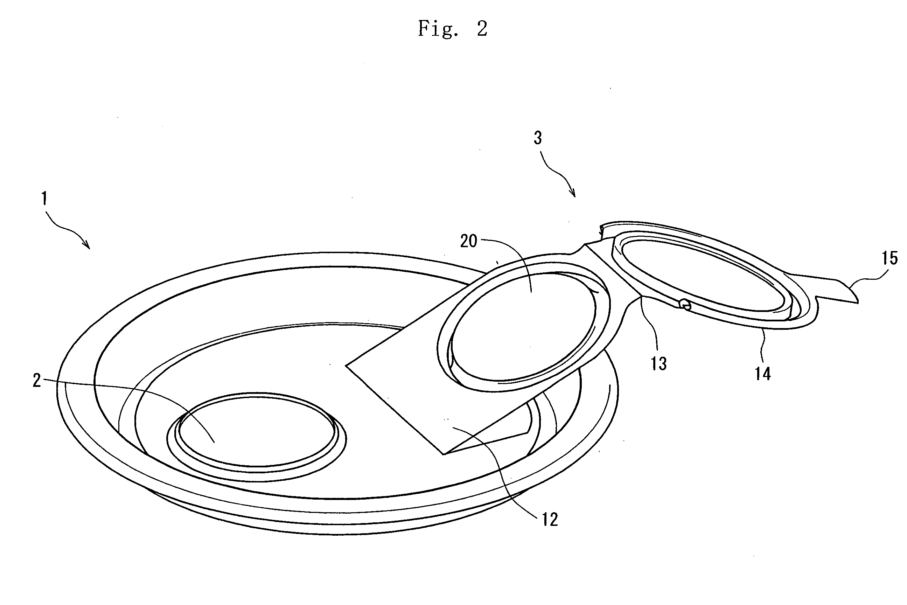

Figs. 1 to 4 are perspective views illustrating the whole constitution of an easily unsealable container closure of the present invention, wherein Fig. 1 illustrates principal constituent members of the container closure in a state of before being assembled, and Fig. 2 illustrates a state where the container closure is unsealed.

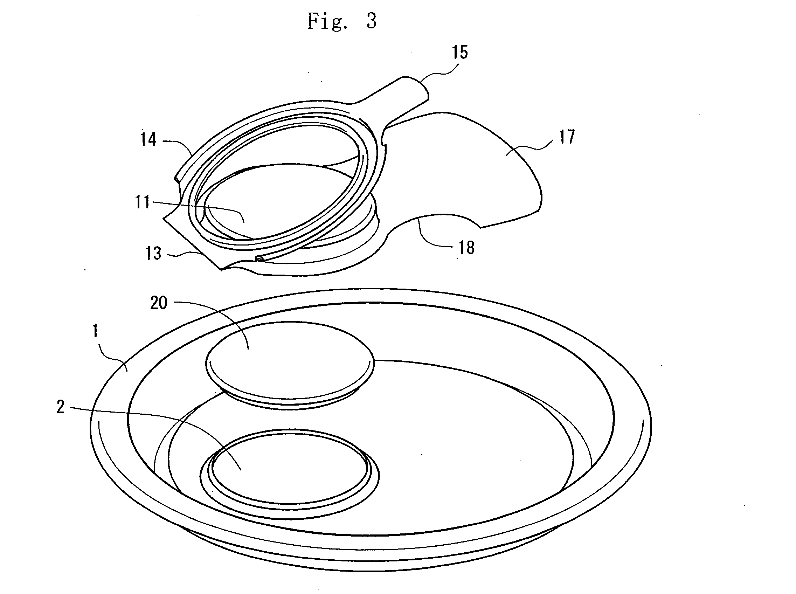

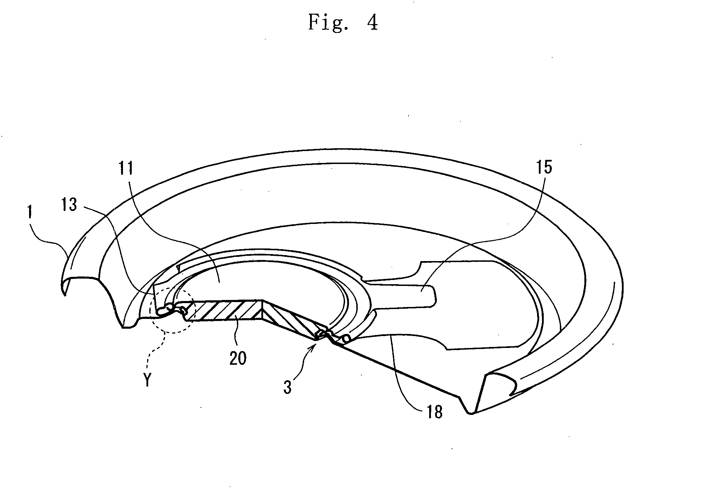

Fig. 3 illustrates principal constituent members of before the container closure of the invention is assembled like the container closure shown in Figs. 1 and 2 except the shapes of some members are different, and Fig. 4 illustrates the sectional structure of the container closure in a state where it has not been unsealed.

As will be obvious from Figs. 1 and 2, the container closure of the invention comprises a closure member generally designated at 1 and an unsealing tab generally designated at 10.

The closure member 1 has an opening 2 that has been formed in advance, and the unsealing tab 3 includes a flexible tab member 10 and a plug member 20. In the case of the container shown here, the plug member 20 is formed in nearly a circular truncated conical shape so as to be fitted to the opening 2 of the closure member 1, and the bottom surface side thereof is adhered to a portion designated at 11 of the flexible tab member 10.

The unsealing tab 3 comprises a sealing portion 12 formed by folding the single flexible tab member 10 so as to cover the opening 2 of the closure member 1 and is adhered to the periphery of the opening 2 to accomplish the sealing, and a folding portion 14 continuous to the sealing portion 12 via a folding line 13 that becomes the unsealing start end. A grip portion 15 is formed on the folding portion 14.

To facilitate the unsealing operation in this embodiment, the single flexible tab member is folded to form the sealing portion and the folding portion. Not being limited thereto only, however, there can be further employed an embodiment of forming the grip portion directly at the unsealing start end of the sealing portion.

In this container closure, the unsealing tab 2 is adhered only at the portion of the flexible tab member 10. Not being limited to the flexible tab member 10 only, however, the unsealing tab 2 can further be adhered to the plug member 20. This embodiment is desired not only from the standpoint of maintaining the sealing while the container, which is subject to be exposed to severe conditions such as high temperatures and shocks, has not been unsealed but also maintaining good sealing when the container is re-sealed.

Further, the unsealing tab 3 has a portion that is strongly bonded to the closure member 1 at a portion facing the unsealing start end 13 with the opening held therebetween in a state where the unsealing tab 3 is placed on the opening 2 of the closure member 1. In the container closure of the illustrated embodiment, three curls 16 are formed in the above-mentioned portion.

The three curls are further formed on the closure member 1 at corresponding positions. The two members are strongly joined and fixed together upon adhering the curls together.

Therefore, even when the unsealing tab 3 is pulled off from the unsealing start end 13 to unseal the container, the tab 3 is not removed from the closure member 1 (stay-on tab, see Fig. 2).

The container closure shown in Figs. 3 and 4, comprises the closure member 1 and the unsealing tab 3, the closure member 1 having the opening 2, the unsealing tab 3 including the flexible tab member 10 and the plug member 20, and the plug member being integrally adhered to the flexible tab member 10 so as to be fitted to the opening 2 in the same manner as that of the container shown in Figs. 1 and 2 above.

In this container closure, too, the unsealing tab 3 is so provided that the flexible tab member 10 is adhered and fixed to the periphery of the opening 2 to cover the opening 2.

However, the container closure is not provided with the curls of the container of Figs. 1 and 2, and the portions where the closure member 1 and the flexible tab member 10 are adhered together are flat surfaces.

In the container closure of Figs. 3 and 4, instead, the flexible tab member 10 is cut away from both sides thereof in the direction of width at a portion 18 just before the portion 17 where the two members are adhered and fixed, so that the peeling stops at that portion.

To unseal the easily unsealable container closure of the present invention, the folding portion 14 is raised by pulling the grip portion 15 of the unsealing tab 3 by fingers and is further pulled toward this side from the unsealing start end (folding line) 13 to pull the plug member 20 from the opening 2 while tearing off the adhesion at the sealing portion, and the pulling operation is discontinued before the portion 17 of adhesion and fixing.

To effect the re-sealing after the container is once unsealed, the upper surface of the adhering portion 11 of the plug member 20 of the unsealing tab 3 is pushed, so that the plug is fitted again to the opening.

Described below in further detail are various embodiments dealing with how to adhere the flexible tab member of the unsealing tab to the edge of the opening of the closure member in the container closure of the invention and how to fit the plug member to the edge of the opening of the closure member.

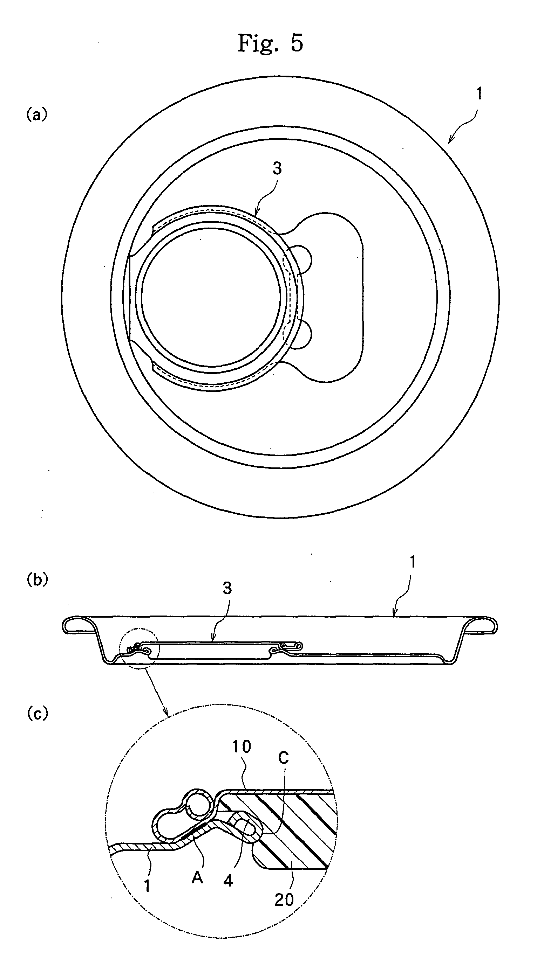

Fig. 5(a) is a plan view illustrating a container closure (not yet unsealed) of the present invention using a plastic plug, Fig. 5(b) is a sectional view thereof and Fig. 5(c) is a partial view illustrating, on an enlarged scale, a portion where the edge of the opening and the flexible tab portion are adhered together and an embodiment of sealing the edge of the opening by fitting the plug member thereto.

In the container closure of Fig. 5, the edge 4 of the opening is so folded as to form a smoothly curved surface facing the outer surface side (upper side in the drawing) of the closure member 1, and the fit-sealing surface is a portion designated at C, i.e., facing the center of the closure.

In the fitting of this embodiment, the sealing is maintained chiefly by the repelling elastic force of the plastic plug member in the radial direction.

In the container closure shown here, the flexible tab member is adhered to the closure member 1 at a portion A.

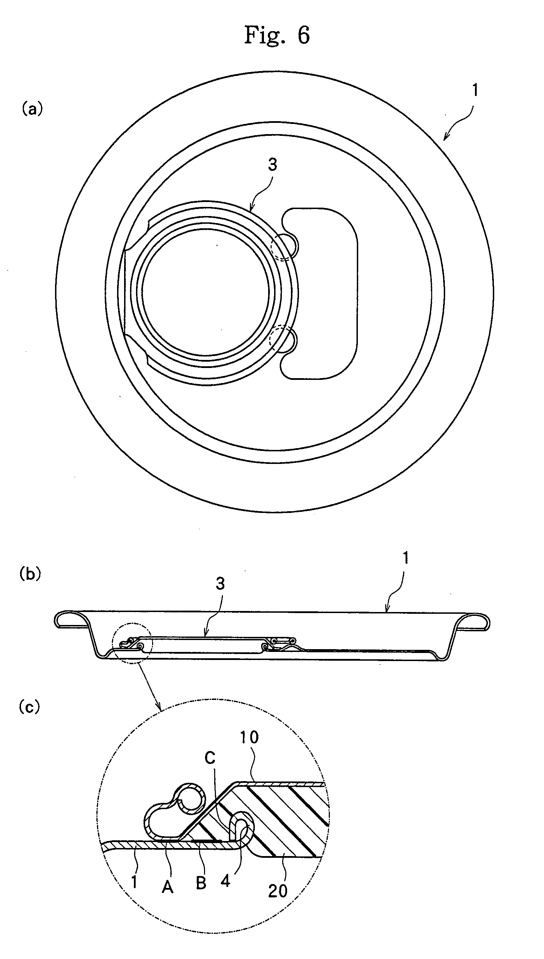

Fig. 6(a) is a plan view illustrating another container closure of the present invention using, similarly, the plastic plug, Fig. 6(b) is a sectional view thereof and Fig. 6(c) is a partial view illustrating, on an enlarged scale, a portion (sealing portion) fitted to the folded edge 4 of the opening that is designated at C and the surface thereof is facing the circumferential direction of the closure.

The closure member 1 is adhered to the flexible tab member 10 at a portion A and is adhered to the plug member 20 at a portion B.

In the fitting of this embodiment, even when the container closure is heated, the sealing is not easily impaired since the plug member is suppressed from expanding as it is held between the edge (near the tilted portion in the drawing) of the flexible tab member 10 and the edge 4 of the opening. Further, even if the re-sealing is repeated, occurrence of creeping of the plug resin is delayed offering excellent advantage concerning the durability of elasticity.

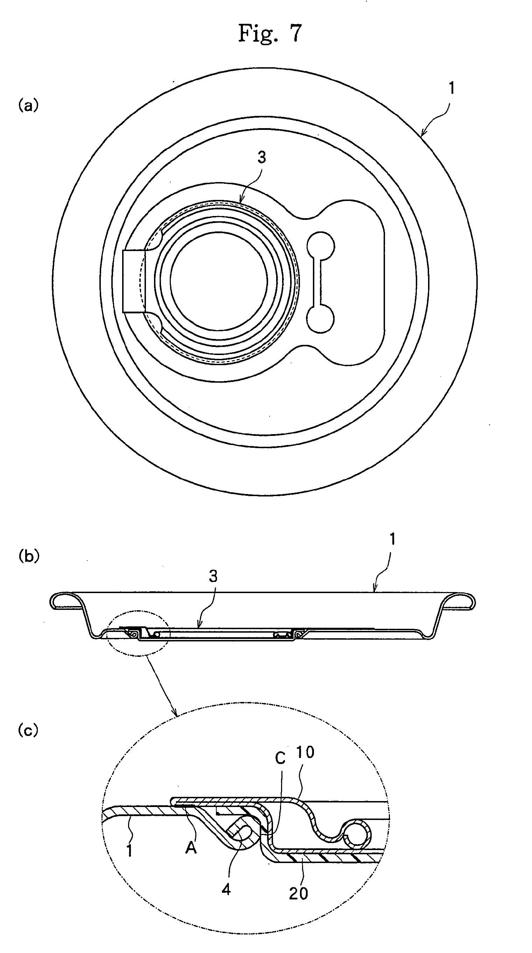

Fig. 7(a) is a plan view illustrating a container closure of the present invention using a metal plug, Fig. 7(b) is a sectional view thereof and Fig. 7(c) is a partial view on an enlarged scale.

In the container closure of Fig. 7, the edge 4 of the opening is folded toward the outer side (upward) of the closure member 1, and the fit-sealing surface is facing the center of the closure as designated at C.

In the container closure shown here, the closure member 1 is adhered to the flexible tab member 10 at a portion A.

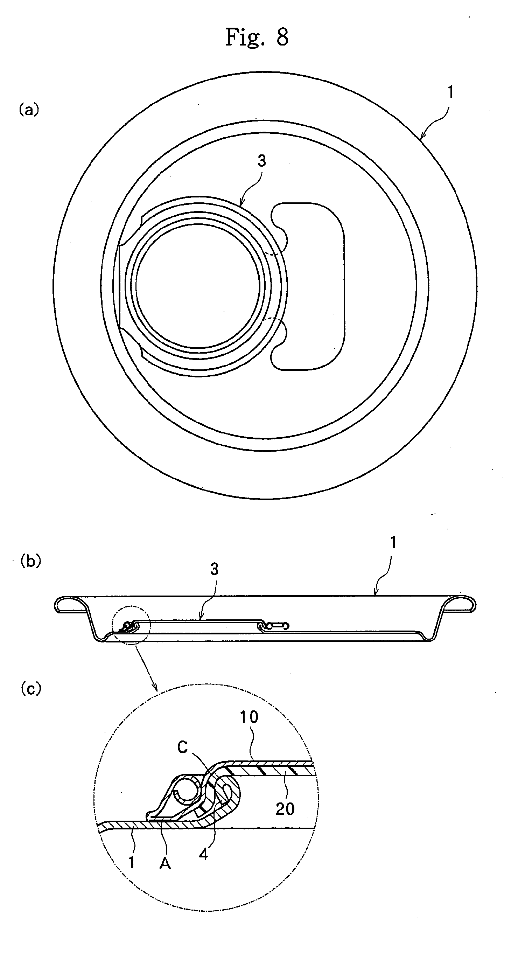

On the other hand, Fig. 8(a) is a plan view illustrating another container closure using a metal plug, Fig. 8(b) is a sectional view thereof and Fig. 8(c) is a partial view on an enlarged scale. Here, the fit-sealing surface (portion C) of the folded edge 4 of the opening is facing the circumferential direction of the closure. The closure member is adhered to the flexible tab member at a portion A.

### (Improved Embodiments)

The easily unsealable container closure of the present invention can be modified in a variety of ways so far as the above-mentioned basic structure is possessed, and the above-mentioned various actions and effects can be obtained relying upon various modifications.

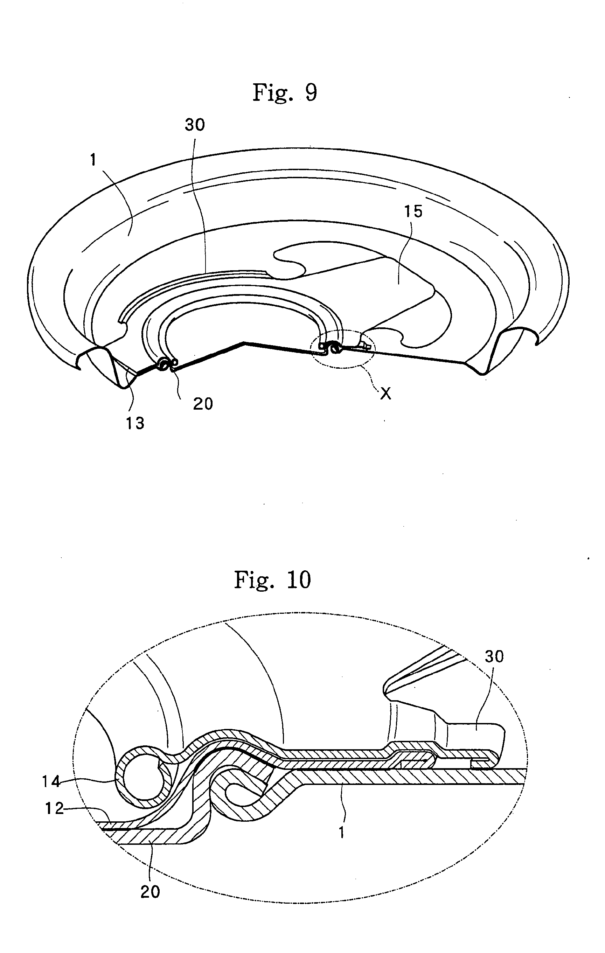

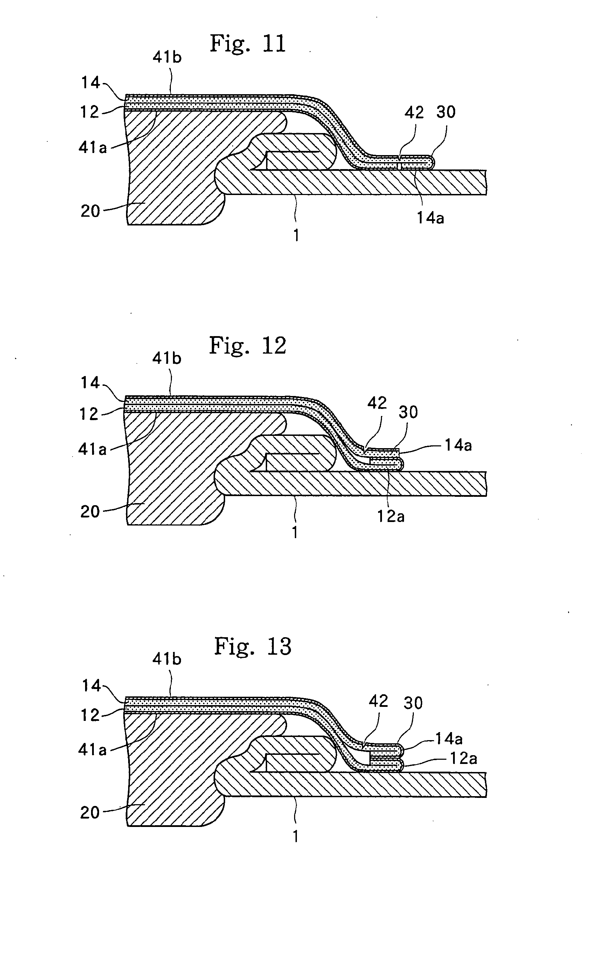

Figs. 9 to 13 are views illustrating the embodiments of the easily unsealable container closure of the invention further clarifying the unseal indication function (tamper evidence), wherein Fig. 9 is a perspective view of the easily unsealable container closure, Fig. 10 is a sectional view illustrating a portion X of Fig. 9 on an enlarged scale, and Figs. 11 to 13 are sectional views illustrating other embodiments of the portion X of Fig. 9 on an enlarged scale.

In the easily unsealable container closures of these embodiments, too, the basic constitution is the same as the one described above with reference to Figs. 1 to 4. In these embodiments, an important feature resides in that the folding portion 14 of the flexible tab member 10 is fixed by being adhered to the closure member 1 or to the sealing portion 12. Therefore, if the adhered portion at the folding portion is torn off at the time of unsealing the container for the first time, the folding portion can no longer be fixed to the closure member or to the sealing portion again. After once unsealed, therefore, the folding portion is placed in a free state separated away from the sealing portion except the unsealing start end. Therefore, it can be judged at a glance that the container has been once unsealed.

That is, referring to Figs. 9 and 10, a folded portion 30 that is folded toward the sealing portion 12 is formed on the outer peripheral portion of the ring-like portion of the folding portion 14 of the flexible tab member. The folded portion 30 has been adhered and fixed to the closure member 1 in the state of before being unsealed.

The unsealing tab 3 is fixed to the closure member 1 by applying an adhesive agent to the closure member 1 in advance and by fixing the sealing portion 12 of the unsealing tab to the closure member 1, or by forming an adhesive layer on at least one surface of the flexible member constituting the unsealing tab, and using the adhesive layer as a surface that comes into contact with the closure member of the sealing portion.

Figs. 11 to 13 are views illustrating other junctions of the sealing portion and the folding portion. Referring to Figs. 11 to 13, when an adhesive layer 41a has been formed on the surface of the sealing portion 12 that comes in contact with the closure member 1, the surface of the folding portion 14 that does not come in contact with the sealing portion 12 becomes the adhesive layer 41b. Therefore, the edge of the folding portion 14 excluding at least the unsealing start end 13 and the grip portion 15, is curled or folded toward the side of the closure member, so that the adhesive layer 41a is positioned on the side of the closure member 1 enabling the folding portion 14 to be fixed like fixing the sealing portion 12.

In the embodiment shown in Fig. 11, a score 42 is formed at an end of the folding portion 14. When the folding portion 14 is torn off for unsealing, the folding portion is broken at the core 42, and an edge portion 14a of the folding portion 14 adhered and fixed to the closure member 1 remains on the closure member 1, making it possible to judge at a glance that the container was once unsealed. The score 42 may not be formed, and the folding portion 14 may be peeled off together with the edge portion 14a when the folding portion 14 is torn off for unsealing. In this case, too, the folding portion 14 cannot be fixed again to the closure member 1 clarifying the fact that the container was once unsealed.

In an embodiment illustrated in Fig. 12, the edge 12a of the sealing portion is curled or folded toward the side of the folding portion; i.e., the edge of the sealing portion 12 has the adhesive layer 41a on the side of the folding portion enabling the folding portion 14 to be adhered and fixed to the sealing portion. In this embodiment, too, the score 42 is formed in the end of the folding portion 14. Therefore, the edge portion 14a of the folding portion 14 adhered and fixed to the edge 12a of the sealing portion remains on the sealing portion making it possible to judge at a glance that the container was once unsealed.

Referring further to Fig. 13, the edge of the folding portion 14 is curled or folded toward the side of the sealing portion in the embodiment of Fig. 12, whereby the adhesive layer 41a of the sealing portion faces the adhesive layer 41b of the folding portion so that they are more strongly adhered and fixed. In this embodiment, too, the score 42 is formed at the edge 14a of the folding portion 14 like in the embodiment of Fig. 12. The edge portion 14a of the folding portion 14 adhered and fixed to the edge 12a of the sealing portion remains on the sealing portion making it possible to judge at a glance that the container was once unsealed.

In Figs. 12 and 13, further, the score may be formed on the side of the sealing portion. In this case, the edge of the sealing portion is transferred to the side of the folding portion to clearly prove that the container was once unsealed.

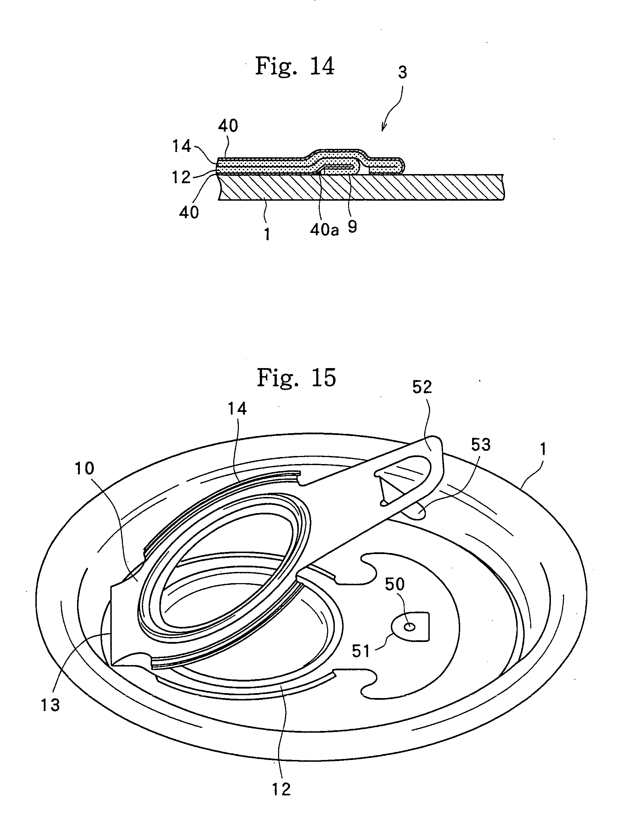

In an embodiment illustrated in Fig. 14, an important feature resides in that the end of the unsealing tab is folded or curled toward the side of the closure member.

That is, referring to Fig. 14, an adhesive resin formed on the unsealing tab 3 or the closure member 1 or an adhesive agent 40 applied thereto and is melted and pushed may protrude (as designated at 40a) between the closure member 1 and the unsealing tab 3, but does not protrude toward the outer side beyond the folded end 9. Besides, the adhesive resin or the adhesive agent that has protruded remains strongly adhered to the adhesive resin or the adhesive agent 40 of the unsealing tab 3 at the time when the unsealing tab is torn off for unsealing. Accordingly, the adhesive resin or the adhesive agent 40 is peeled off the closure member 1 accompanying the unsealing tab 3, and does not remain forming streaks on the closure member after unsealed. Therefore, the easily unsealable container closure of this embodiment offers excellent appearance as well as excellent touch feeling when a person drinks with his mouth in touch with the closure member. Besides, the adhesive resin or the adhesive agent is effectively prevented from being drunk undesirably.

The embodiments illustrated in Figs. 15 to 17 deal the easily unsealable container closures permitting the gas to be vent earlier than unsealing the opening portion particularly when a positive pressure builds up in the container to prevent the contents from gushing out.

In the easily unsealable container closure of the present invention, the unsealing tab comprises a flexible tab member and a plug member formed to be fitted to the opening portion of the closure member, the plug member being fitted to the opening portion to exhibit excellent pressure resistance. Therefore, the easily unsealable container closure can be applied even to the content that produces a positive pressure in the container. In particular, the folding portion that is to be torn off first is adhered and fixed onto the outer surface side of the closure member so as to seal a vent hole formed in the closure member. Upon tearing off the folding portion from the outer surface side of the closure member, therefore, the vent hole is opened and the inner pressure is released. Even when a positive pressure builds up in the container, therefore, the content is effectively prevented from gushing out.

That is, referring to Fig. 15, the closure member 1 has the opening portion 2 through which the content flows out and a vent hole 50 of a diameter smaller than that of the opening portion 2 formed along the diameter of the closure member. The unsealing start end (folding line) 13 of the sealing portion is positioned on the side of the opening portion 2 in the closure member. The sealing portion 12 is adhered and fixed to the closure member 1 establishing the direction of tearing from the unsealing start end 13 toward the opening portion 2 in the closure member and, then, toward the vent hole 50. The sealing portion 12 is adhered and fixed to the closure member so as to cover the opening portion 2 in the closure member and has an opening 51 formed at a portion corresponding to the vent hole 50. The folding portion 14 comes in contact with the portion corresponding to the vent hole 50 in the closure member. A grip ring 52 is formed in the folding portion 14 at an end opposite to the unsealing start end 13. In this embodiment, further, a protruded portion 53 is formed at a position facing the grip ring 52. The protruded portion 53 is folded toward the side of the sealing portion 12 and is adhered and fixed so as to cover the vent hole 50.

In the embodiment shown in Fig. 15, the flexible tab member 10 has a layer of a heat-sealing resin formed on the surface of the sealing portion 12 on the side that comes in contact with the closure member 1 to adhere and fix the sealing portion 12 to the closure member 1. The layer of the heat-sealing resin has also been formed on the outer surface of the folding portion 14. Therefore, upon folding the protruded portion 53 toward the side of the sealing portion as described above, the vent hole 50 can be sealed without the need of separately using the adhesive agent, and the folding portion 14 can be fixed to the closure member.

To unseal the easily unsealable container closure of this embodiment, first, the grip ring (grip portion) 52 of the folding portion 14 is gripped and is pulled up with the unsealing start end (folding line) 13 as a fulcrum. This tears off the adhering portion of the protruded portion 53 adhered to the periphery of the vent hole 50 to release the pressure in the container. Next, the grip ring 52 of the folding portion 14 is pulled by a finger in the direction of tearing off the sealing portion thereby to tear off the adhering portion between the sealing portion 12 and the closure member 1. Simultaneously with the tearing off of the sealing portion 12, the plug member 20 is removed from the opening portion 2 to unseal the container.

The position of the vent hole 50 is not limited to the one of the embodiment shown in Fig. 15 but may be formed at any place provided it is unsealed earlier than the opening portion 2.

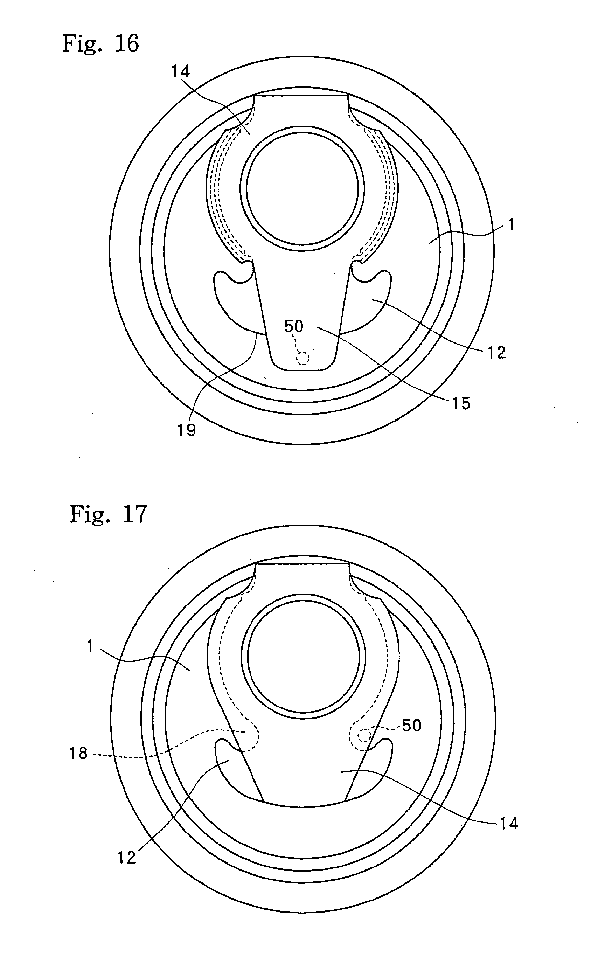

As shown in, for example, Fig. 16, the vent hole 50 may be formed at a position on the outer side of the end 19 of the fixing portion 17 of the sealing portion, and the grip portion 15 of the folding portion 14 may be extended beyond the end 19 to cover the vent hole 50. As shown in Fig. 17, further, the vent hole 50 may be formed at a position of a notch 18 of the sealing portion 12, and the notch 18 may be covered by the folding portion 14.

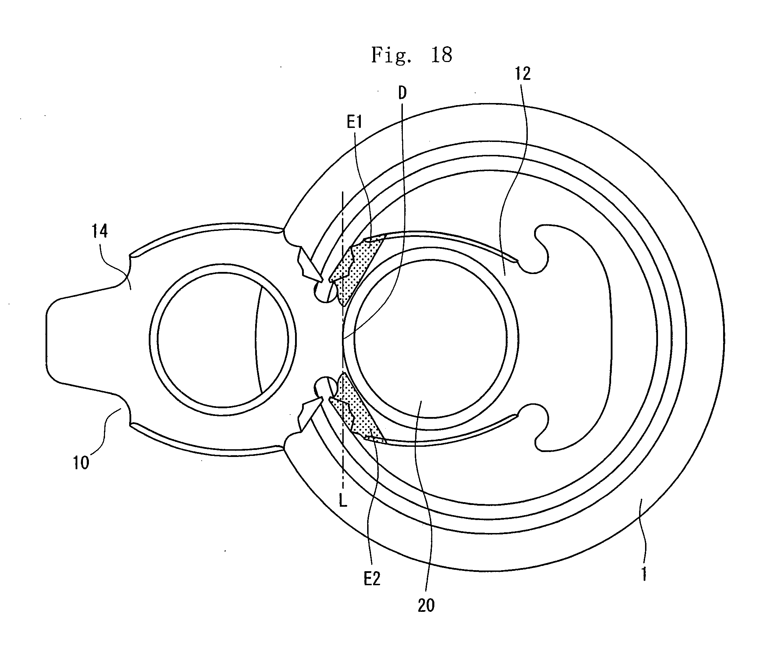

Figs. 18 to 23 are views illustrating the embodiments further improving the unsealability requiring a decreased force for unsealing.

To unseal the unsealing tab comprising the flexible member and the plug member fitted to the opening portion of the closure member used for the easily unseable container closure of the invention, forces are necessary to tear the flexible member off the closure member and to pull the plug member from the opening portion. In particular, the greatest force is necessary for pulling the plug member from the opening portion. Therefore, a relatively large force is often required for the first unsealing operation.

In this embodiment, the sealing portion positioned near the line of the pulling start end of the plug member is adhered in advance in a manner that it can be torn off or in a weakly adhered manner, so that the flexible tab can be torn off requiring a decreased force at the time of pulling the plug member that requires the greatest force and that the unsealing as a whole is accomplished requiring a decreased force.

Fig. 18 is a plan view of the unsealing tab 3 in a state where the adhesion is torn off between the sealing portion 12 and the folding portion 14 in the easily unsealable container closure which comprises the plug member 20 and the flexible member 10 that includes the sealing portion 12 and the folding portion 14. To pull the plug member 20 from the opening portion, a force is required for pulling the plug member 20, and another force is required for tearing off the pulling start end D of the plug member 20 and, nearly at the same time, for tearing off the adhered portions E1, E2 between the sealing portion 12 and the closure member 1 located near a line L indicating the position where the adhesion between the closure member 1 and the sealing portion 12 starts tearing off.

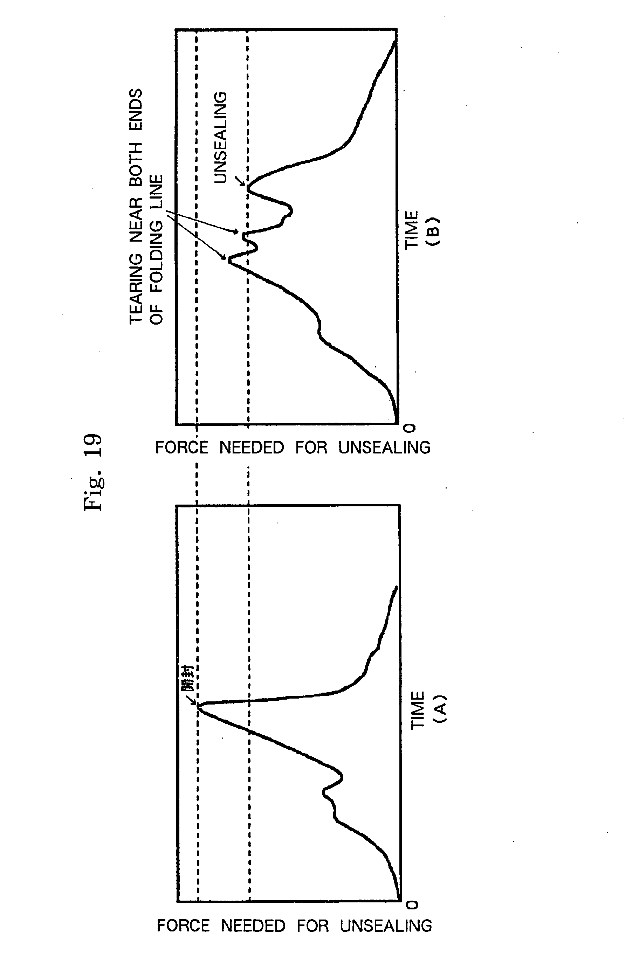

That is, referring to Fig. 19, the force required for pulling the plug member is nearly equal to the force needed for unsealing the plug that is sealed again after the easily unsealable container closure was once unsealed. To unseal the easily unsealable container closure for the first time, however, the force for tearing the adhesion between the surrounding sealing portion 12 and the closure member 1 is needed in addition to the force needed for pulling the plug member. Therefore, a considerably large force is needed for the unsealing (see Fig. 19(A)).

In the easily unsealable container closure of this embodiment, on the other hand, the adhered portions E1 and E2 are weakly adhered in a manner of being torn off or in a weakly adhered manner being partly torn off, so that the adhered state is torn off requiring a decreased force prior to pulling the plug member. Therefore, the container as a whole is unsealed requiring a decreased force (see Fig. 19(B)). Besides, the adhered portions E1 and E2 are placed in a torn off or weakly adhered state accompanying the unsealing operation maintaining the sealing of before the unsealing is effected, preventing the periphery of the opening portion from being fouled, which is hygienic.

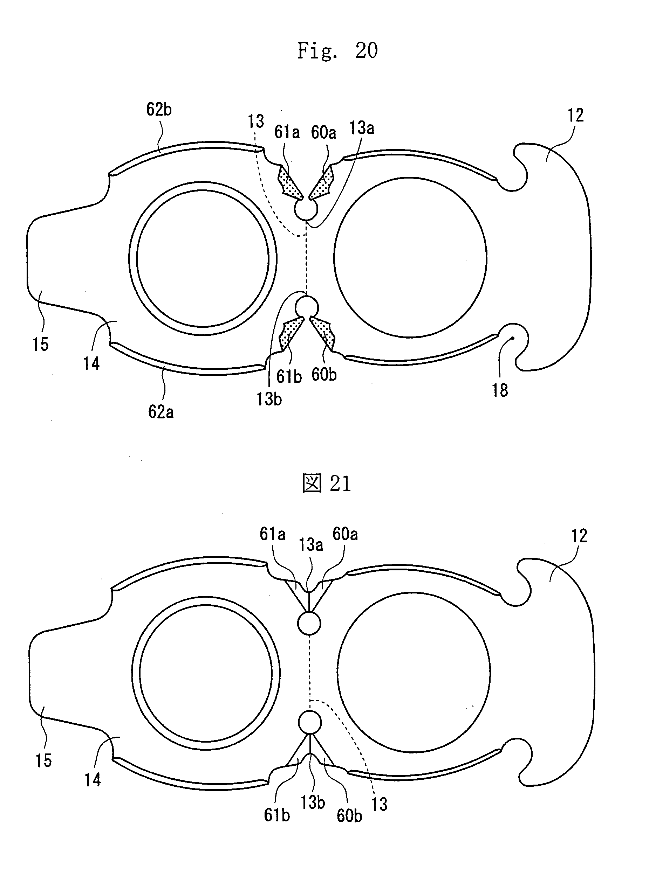

In the easily unsealable container closure shown in Fig. 20, the edges near both ends 13a, 13b of the folding line 13 between the sealing portion 12 and the folding portion 14, are folded inward to form the adhering portions 60a, 60b and 61a, 61b. The sealing portion 12 and the folding portion 14 are folded along the folding line 13, and the adhering portion 60a of the sealing portion is adhered to the adhering portion 61a of the folding portion, and the adhering portion 60b of the sealing portion is adhered to the adhering portion 61b of the folding portion in a state of being fixed to the closure member 1. As a result, in order to unseal the easily unsealable container closure, if the grip portion of the folding portion 14 is gripped to pull up the folding portion 14 with the folding line 13 as a fulcrum, adhesion of the folded portions 62a, 62b of the ring portion of the folding portion is broken, first. Here, however, the tearing of the folding portion 14 from the closure member 1 ends in a state where the adhering portions 60a, 61a and 60b, 61b of the sealing portion 12 and of the folding portion 14 remain adhered near both ends 13a, 13b of the folding line. Next, a finger is fitted into the ring portion of the folding portion 14 to tear the sealing portion 12 off the closure member 1 with the folding line 13 as the tearing start end of the sealing portion 13. Then, the sealing portion 12 starts tearing from the closure member 1 in a state where the adhering portions 601, 61a and 60b, 61b of the sealing portion 12 and the folding portion 14 remain adhered together near both ends 13a and 13b of the folding line. As a result, the adhered regions E1 and E2 shown in Fig. 18 are torn off or assume the weakly adhered state before the plug member 20 is pulled from the opening portion 2. The sealing portion 12 continues to be torn off the closure member 1. When the plug member 20 starts to be pulled off the opening portion 2, the adhesion between the sealing portion 12 and the closure member 1 is already assuming a torn-off state or a weakly adhered state being partly torn off near the pulling start end D of the opening 2. Therefore, a force needed for tearing the peripheral adhered portion only is added to the force needed for pulling the plug member 20. Therefore, the plug member 20 can be easily pulled from the opening portion 2.

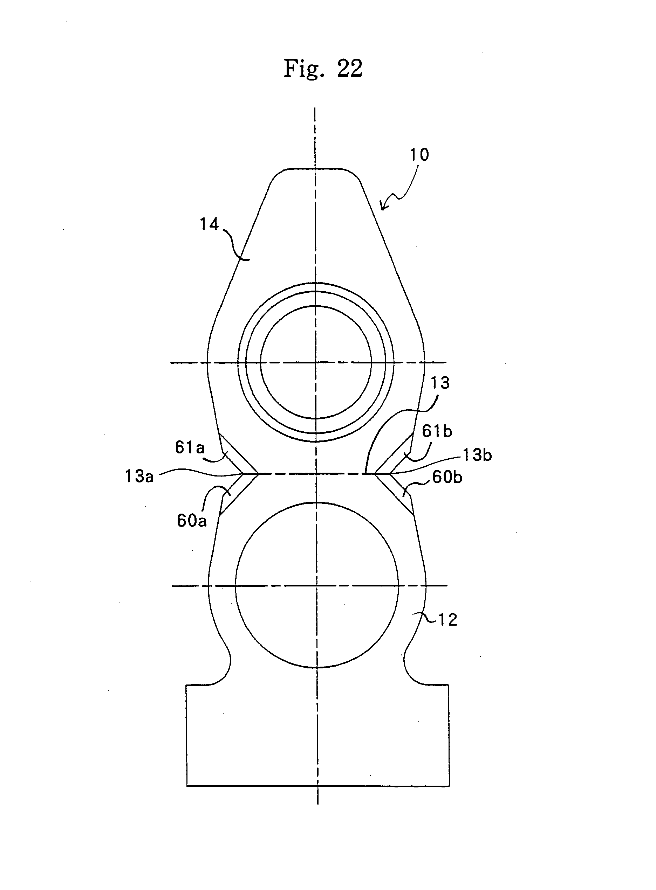

Figs. 21 to 23 are views illustrating other flexible members in the easily unsealable container closure of the present invention.

The flexible member 10 shown in Fig. 21 has the basic constitution same as that of Fig. 20 with the exception of difference in the adhering portions 60a, 60b and 61a, 61b of the sealing portion 12 and the folding portion 14 near both ends 13a and 13b of the folding line 13. That is, in Fig. 20, protruded portions were formed at the edges near both ends 13a, 13b of the folding line 13 of the sealing portion 12 and the folding portion 14, and were folded inwards to form the adhering portions. In Fig. 21, however, the folded portions are not provided but, instead, both ends 13a and 13b of the folding line 13 are folded like mountains so as to be folded between the sealing portion 12 and the folding portion 14, and the insides of the mountain portions (back sides of 60a, 61a and 60b, 61b in Fig. 21) are adhered together.

The flexible member 10 shown in Fig. 22 is basically the same as those of Figs. 20 and 21 except the shapes of the sealing portion 12 and the folding portion 14. The adhering portions 60a, 61a and 60b, 61b of the sealing portion 12 and the folding portion 14 provided near both ends 13a, 13b of the folding line 13 are directly adhered together in a state where the sealing portion 12 and the folding portion 14 are overlapped one upon the other.

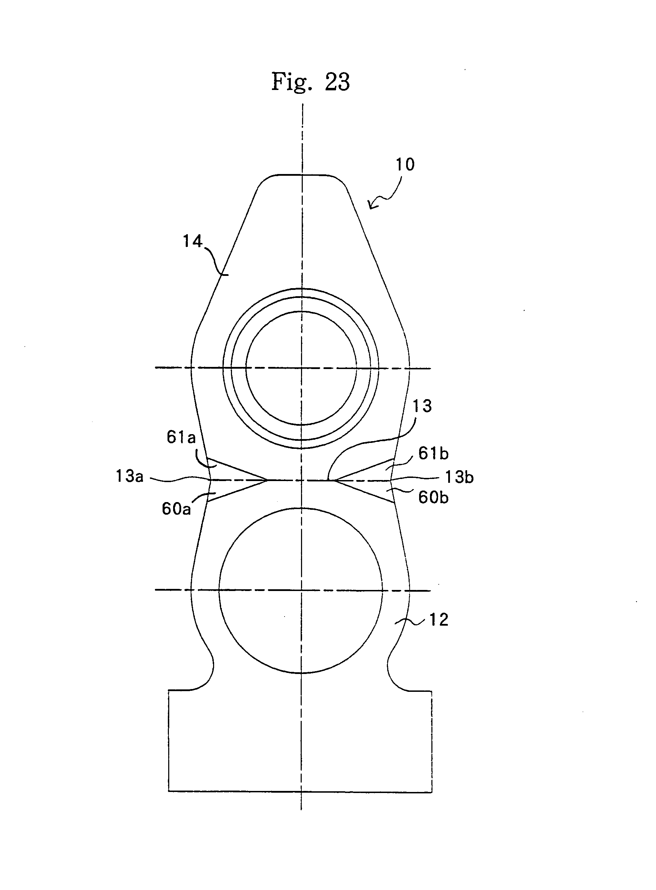

In the flexible member 10 shown in Fig. 23, too, the adhering portions 60a, 61a and 60b, 61b of the sealing portion 12 and the folding portion 14 provided near both ends 13a, 13b of the folding line 13 are directly adhered together in a state where the sealing portion 12 and the folding portion 14 are overlapped one upon the other.

In any one of the embodiments of Figs. 20 to 23, both ends 13a and 13b of the folding line 13 of the flexible member are cut away inward from the outer edges of the sealing portion 12 and the folding portion 14, whereby the sealing portion and the folding portion are adhered over the regions along the arc of the plug member. Therefore, the adhered region between the closure member and the sealing portion, that is to be torn off or weakened prior to pulling the plug member, also complies with the region along the arc of the plug member.

### (Plug Member)

An important feature of the container closure of the present invention resides in that the unsealing tab is provided with a plug member of a shape that fits to the opening.

The plug member which is relatively thick produces a strong repelling elastic force at the time of re-sealing, and exhibits re-sealing performance very superior to that of when the opening portion is covered with a conventional tape tab only.

As the plug member of the invention, though there is no particular limitation, there can be preferably used either a plastic plug or a metal plug.

A plastic plug which is flexible and rich in sealing elasticity enabling the re-sealing to be effected an increased number of times, is preferred for the containers used in relatively low temperatures, for the containers containing corrosive contents and, particularly, for the containers that do not require particularly high pressure resistance. On the other hand, a metal plug made of a metal or a resin-coated metal having a large strength and a high temperature resistance is preferred for the containers subjected to particularly high temperatures such as hot-filling and retort processing, and for the containers that require a particularly high pressure resistance.

Further, it is important that the plastic plug elutes little into the content and that the metal plug has corrosion resistance against the content.

As the resin materials used for the plastic plug, there can be exemplified polyolefin resins such as polypropylene (PP) and highly dense polyethylene; polyesters such as polyethylene terephthalate (PET), polybutylene terephthalate (PBT) and polyethylene terephthalate isophthalate; polyamides such as 6-nylon, 6,6-nylon; and compositions of blends thereof. When heat resistance, sealing performance and elution resistance of particularly high levels are required, it is desired to use a resin composition of an olefin resin and at least the one selected from a thermoplastic elastomer and a rubbery composition, and it is particularly desired to use a resin composition obtained by blending the three components maintaining a good balance, i.e., an olefin resin component having a high heat resistance, a flexible and viscoelastic resin or elastomer component, and a component that exhibits a distinguished rubbery elasticity.

As the olefin resin, there can be preferably used a polyethylene resin, a polypropylene resin, a copolymer resin obtained by copolymerizing an ethylene or a propylene with a small amount of other olefin, or a composition of a mixture thereof.

More concretely, there can be exemplified polyethylene resins such as a high-density polyethylene (HDPE) produced by the Ziegler method (low-pressure method), Phillips method (intermediate-pressure method) or standard method (intermediate-pressure method), a low-density polyethylene (LDPE) produced by a high-pressure method and a linear low-density polyethylene (LLDPE) produced by using a metallocene catalyst; crystalline random or block polypropylene resin and a crystalline copolymerized resin or an amorphous copolymerized resin obtained by copolymerizing an ethylene or a propylene with a small amount or, usually, less than 10% of other olefin such as an α-olefin having 3 to 18 carbon atoms or norbornene; and a composition obtained by mixing these resins.

As the thermoplastic elastomer or the rubbery composition used together with the olefin resin as an essential constituent material for the plug of the invention, there can be exemplified an ethylene/α-olefin copolymer rubber such as ethylene/propylene copolymer rubber (EPR) obtained by copolymerizing an ethylene with a propylene, 1-butene, 1-pentene, 1-hexene, 1-heptene, 1-octene, 1-nonene, 1-decene, 1-undecene, 1-dodecene or 1-butene; silicone rubbers such as ethylene/propylene/diene copolymer rubber (EPDM), ethylene/vinyl acetate copolymer rubber (EVA), acid-modified ethylene/vinyl acetate copolymer rubber (acid-modified EVA), styrene/isoprene/styrene block copolymer rubber (SIS), styrene/butadiene/styrene block copolymer rubber (SBS), styrene/ethylene/butylene/styrene block copolymer rubber (SEBS), styrene/ethylene/propylene/styrene block copolymer rubber (SEPS), hydrogenated styrene/butadiene/styrene block copolymer rubber (HSBS), hydrogenated styrene/ethylene/butylene/styrene block copolymer rubber (HSEBS), hydrogenated styrene/ethylene/propylene/styrene block copolymer rubber (HSEPS), and methylsilicon rubber (MQ); thermoplastic elastomers such as silane-crosslinked polyethylene, silane-crosslinked polypropylene, and silicane-crosslinked ethylene/vinyl acetate copolymer rubber; and a rubbery composition or a composition of a blend of two or more kinds of such rubbers.

In the present invention, the above olefin resin and at least one of the above thermoplastic elastomer or the rubbery composition are used in combination to obtain a resin composition having a heptane elution amount at 25°C of not larger than 150 ppm, a deformation ratio (JIS K 6723) at 100°C of smaller than 30%, and a compressive permanent strain (JIS K 6262) at 70°C of in a range of 50 to 95%. In particular, it is desired to use a composition obtained by mixing three kinds of polymers, i.e., a polyethylene resin or a polypropylene resin, an ethylene/α-olefin copolymer rubber and a styrene/ethylene/butylene/styrene block copolymer rubber or a hydrogenated product thereof or a styrene/ethylene/propylene/styrene block copolymer rubber or a hydrogenated product thereof, from the standpoint of easily obtaining properties necessary for the plug of the present invention.

The ratio of blending the resin and the rubber varies depending upon the kind of the olefin resin and the kind of the thermoplastic elastomer or the rubbery composition used in combination, and is suitably set depending upon a selected combination to lie in a range of composition that realizes the above properties. In the case of a composition obtained by blending the three components of, for example, polyethylene/ethylene-α-olefin copolymer/SEBS, it is desired that the amount of the SEBS is 3 to 25% by weight and, preferably, 5 to 20% by weight, and the total amount of the SEBS and the ethylene/α-olefin copolymer of a relatively low density is 10 to 60% by weight and, preferably, 15 to 50% by weight from the standpoint of elution and other properties of the plug material.

In the case of a composition obtained by blending the three components of the polypropylene/ethylene-α-olefin copolymer/SEPS, it is necessary that the amount of the SEPS is 3 to 35% by weight and, preferably, 5 to 25% by weight, and the total amount of the SEPS and the ethylene/α-olefin copolymer of a relatively low density is 10 to 65% by weight and, preferably, 15 to 55% by weight.

The composition and the forming method for forming the plug member of the present invention are so selected that the plug member has a heptane elution amount at 25°C of not larger than 150 ppm and, preferably, not larger than 100 ppm, a deformation ratio (JIS K 6723) at 100°C of smaller than 30% and, preferably, not larger than 25%, and a compressive permanent strain (JIS K 6262) at 70°C of in a range of 50 to 95% and, preferably, 55 to 90%.

Therefore, even when the content in the container is a fat-containing food or even when the container is exposed to high temperatures such as hot filling, retort sterilization after being filled, etc., the resin component or low-molecular substances do not elute or migrate into the contents from the plug offering excellent elution resistance, sufficient heat resistance and perfectly intimate sealing and, further, providing elasticity for repetitively sealing the opening.

It is, further, desired that the hardness at normal temperature of the plug member is in a range of 80 to 95 and, more desirably, 80 to 90 as measured by using a type-A durometer indentater and is in a range of 50 to 75 and, more desirably, 55 to 85 as measured by using a type-D durometer indentater in compliance with a cured rubber permanent strain testing method (JIS K 6262) from the standpoint of sealing performance and, particularly, sealing strength and re-sealing the opening.

The resin composition constituting the plug member of the invention may contain small amounts of fluidized paraffin and petroleum resin addition to the above essential constituent components. This makes it possible to impart more flexibility to the composition and adhesiveness to the substrate.

As the method of forming the plug member, there can be exemplified an injection-forming method or a compression-forming method. The junction to the flexible tab member is suitably accomplished by using an adhesive agent or based on a heat-adhesion depending upon the material.

Further, the plug member can be simultaneously formed by the insert-forming method at the time of producing the unsealing tab.

As a metal material for forming the metal plug, there can be used aluminum or a steel. In the case of a laminated metal plug, the laminated material must be, on the side that comes into contact with the flexible tab member, at least a material having adhesiveness to the material that constitutes the plug member, and must, for example, be a polypropylene. On the side that comes in contact with the closure member, the laminated material is, for example, a polyester or a polyamide exhibiting excellent fit-sealing performance to the opening portion of the closure member and exhibiting a protecting action for the content.

The metal plug member is formed by the press-forming.

At the time of producing the unsealing tab, the metal plug may be formed simultaneously therewith by the insert-forming.

### (Flexible Tab Member)

As the member constituting the flexible tab member to which the plug member is adhered, though there is no particular limitation, there can be used an unsealing piece or a tab-forming member that is usually used for the container closures of this kind if it can be joined to the plug member and, particularly, if it is made of a laminate of a metal foil having resin films formed on both surfaces thereof from the standpoint of maintaining balance between the tensile strength at the time of tearing the tab and the flexibility, and corrosion resistance.

A concrete and preferred example of the laminated member is the one obtained by laminating a PET on one surface of an aluminum foil (Al) and laminating a PP on the other surface thereof.

### (Closure Member)

Next, the closure member of the present invention will be described in further detail.

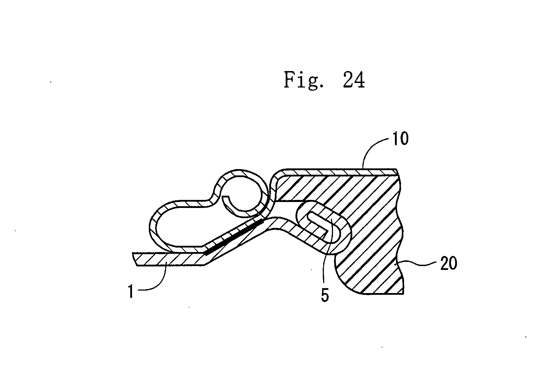

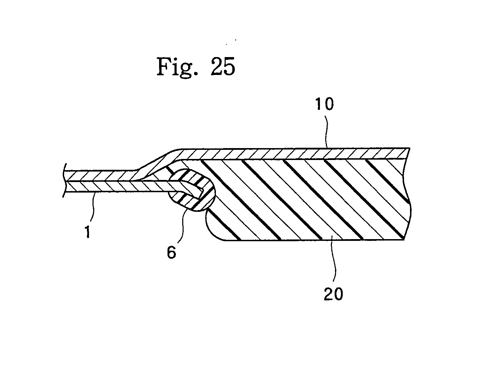

In the closure member of the present invention, the edge of the opening portion is folded or curled in a smooth curved shape toward the outer side of the closure member as designated at 5 in Fig. 24 which is a sectional view illustrating, on an enlarged scale, the edge of the opening in the closure member designated at Y in Fig. 4. Or, as shown in Fig. 25, the edge of the opening is covered with a resin such as PET or PP like a ring as designated at 6 forming a smoothly curved shape without sharp corners. After unsealed, therefore, the edge of the closure is smooth without such danger as causing incised wound even if a person touches the edge and, further, offering protection from corrosion, and fitting well to the plug member of the unsealing tab. Even after the sealing is repeated, therefore, the plug member is not damaged, and a favorably fitted state is maintained for extended periods of time.

It is further desired that the peripheral edge of the closure member has a double-seaming portion so as to be hermetically joined to the can body through the double-seaming.

It is further particularly desired that the surface of the closure member can be heat-adhered on the outer surface side thereof to the flexible tab member and can, further, be heat-adhered to the plug member when it is intended to be adhered to the plug but does not adhere on the inner surface side thereof to the flexible tab member or to the plug member from the standpoint of accomplishing both intimate adhesion to the flexible tab member and to the plug member, and inhibiting the elution into the content.

### (Production Method)

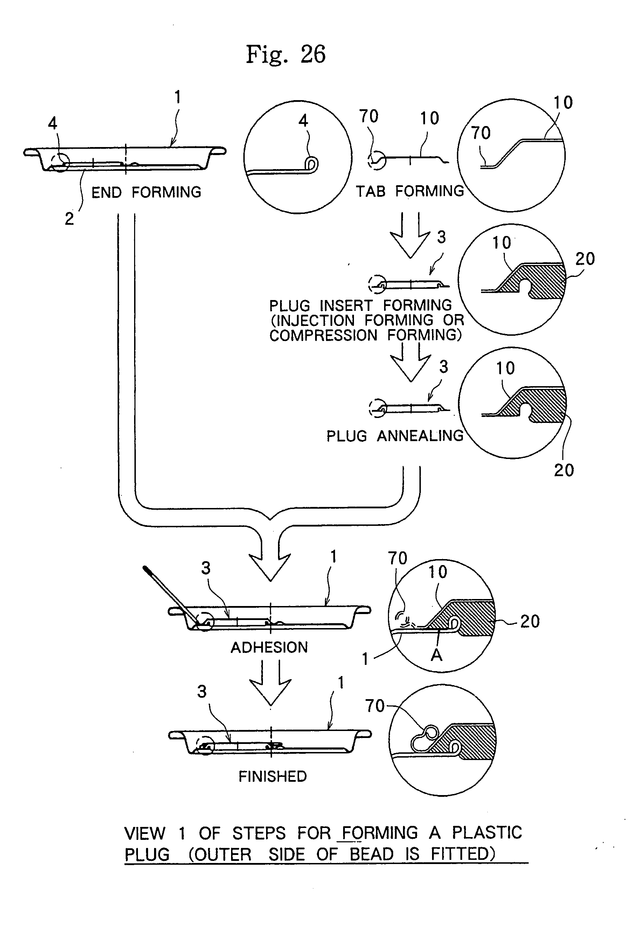

Described below is a method of producing the easily unsealable container closure of the invention. In the case of the container closure of the embodiment shown in Fig. 6 using a plastic plug member and having the fit-sealing surface that is directed toward the outer peripheral edge of the closure, there can be employed a method of Fig. 26 which is a diagram illustrating the assembling steps.

In this method of production, first, the edge 4 of the opening 2 of the closure member 1 is folded toward the outer surface side (upper side in the drawing) to form a smoothly curved surface to execute the edge treatment (end forming).

On the other hand, the material (PET/Al/PP laminated sheet) of the flexible tab member 10 of the unsealing tab 3 is formed into the shape of the tab (see Figs. 6(a) and 6(b))(tab forming).

A resin (PET) for forming the plug member 20 is integrally formed on the flexible tab member 10 that is formed to produce the unsealing tab 3 (plug insert forming).

Next, the plug 20 of the unsealing tab 3 is annealed (plug annealing), and predetermined adhering portions of the flexible tab member 10 of the unsealing tab 3 and of the plug member 20 are adhered to the edge 4 of the closure member (adhesion).

After the adhesion has been finished, the edge 70 of the unsealing tab is finished, such as treating the edge to obtain a finished product (finished).

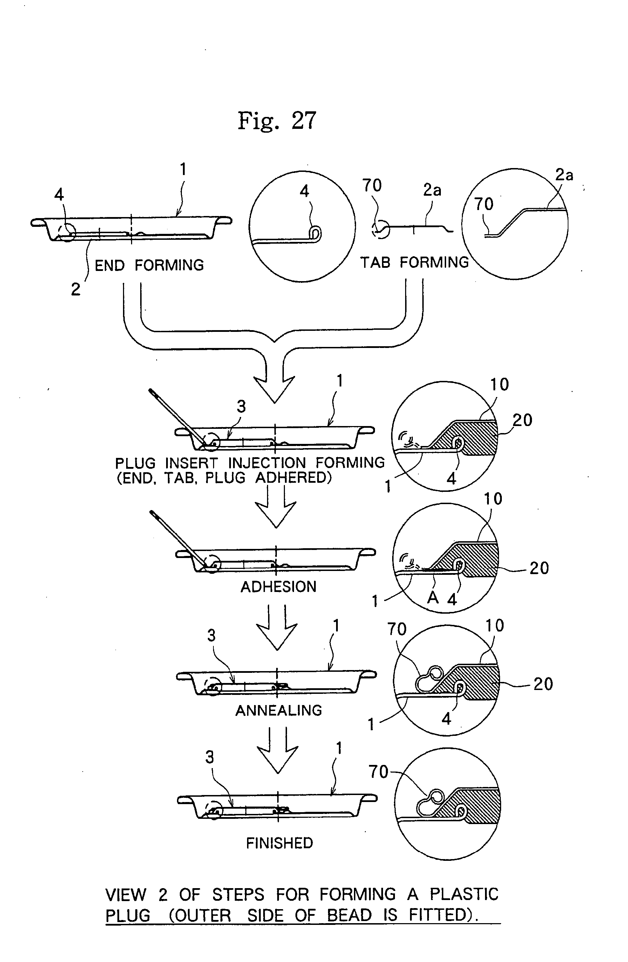

Fig. 27 is a diagram of assembling steps illustrating another method of producing the plastic plug container closure according to the same embodiment as that of Fig. 26 making, however, a difference from the method of Fig. 26 with respect to forming the plug 20 by the insert injection forming, adhering the flexible tab member to the edge 4 of the opening of the closure ember, and adhering the plug member 20 to the end of the opening of the closure member all nearly continuously and sequentially followed by annealing.

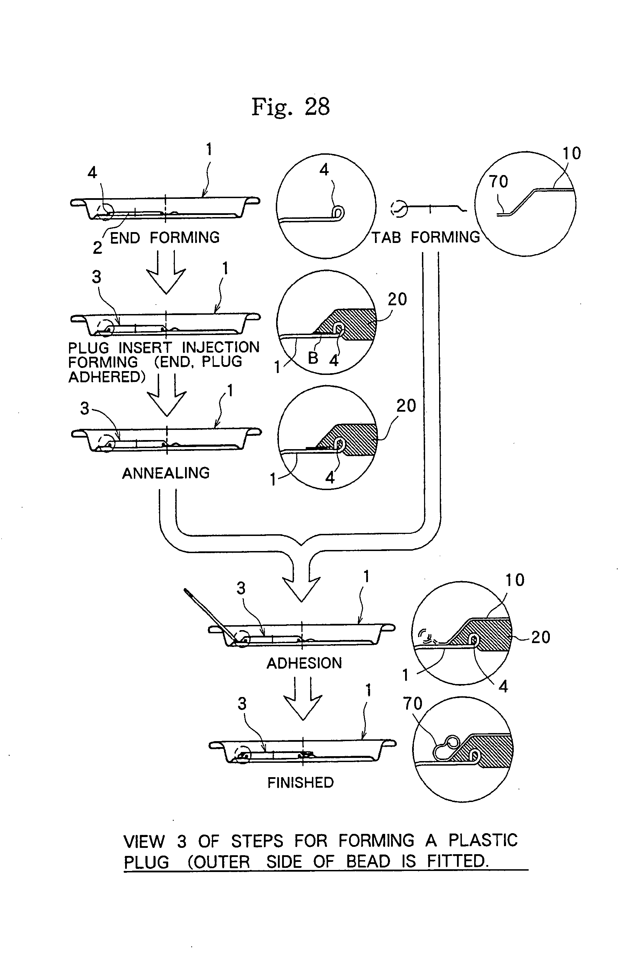

Fig. 28 is a diagram of assembling steps illustrating a further method of producing the plastic plug container closure according to the same embodiment as that of Fig. 26. According to this method, however, the insert injection forming of the plug 20 and the adhesion to the edge 4 of the opening of the closure member are executed separately from the formation of the flexible tab member 10. Thereafter, the plug 20 adhered to the closure member 1 is annealed. Then, the flexible tab member 10 separately formed is adhered to the plug 20 and to the end 4 of the opening of the closure member followed by the finishing treatment to obtain the finished product.

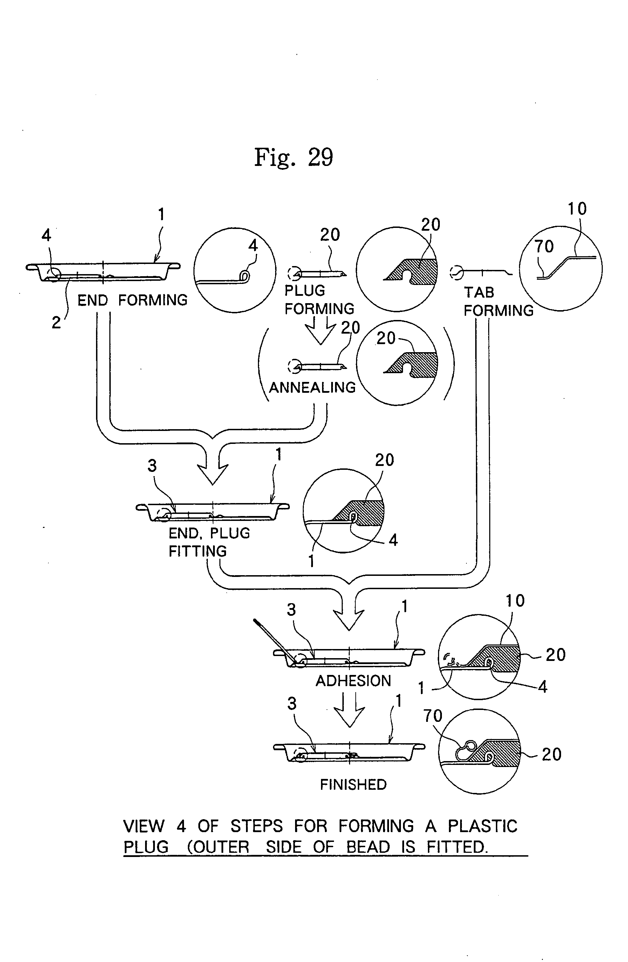

Fig. 29, too, is a diagram of assembling steps illustrating a still further method of producing the plastic plug container closure according to the same embodiment as that of Fig. 26. According to this method, however, the edge 4 of the opening of the closure member 1 is treated, the plug member 20 is formed and is annealed, and the flexible tab member 10 is formed, all separately from each other. First, the plug member 20 is fitted to the edge 4 of the opening in the closure member. Thereafter, the closure member 1, the plug 20 and the flexible tab member 10 are adhered, respectively, to obtain a finished product.

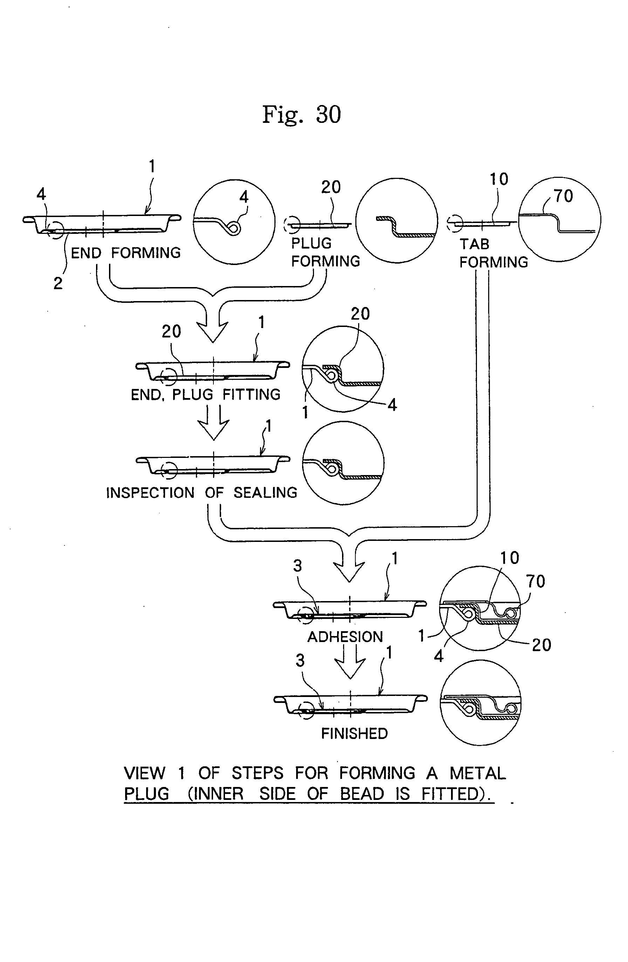

Further, the container closure of the diagramed embodiment using a metal plug member and having a fit-sealing surface directed toward the center of the closure, can be produced by a method illustrated in Fig. 30 which is a diagram of assembling steps.

According to this method, the edge 4 of the opening of the closure member 1 is treated (end forming), and the metal plug member 20 (plug forming) and the flexible tab member 10 (tab forming) are formed separately. Then, the metal plug 20 is fitted to the edge 4 of the opening in the closure member (fitting of end and plug), the sealing thereof is inspected, the flexible tab member 10 is adhered and is finally finished to obtain a finished product.

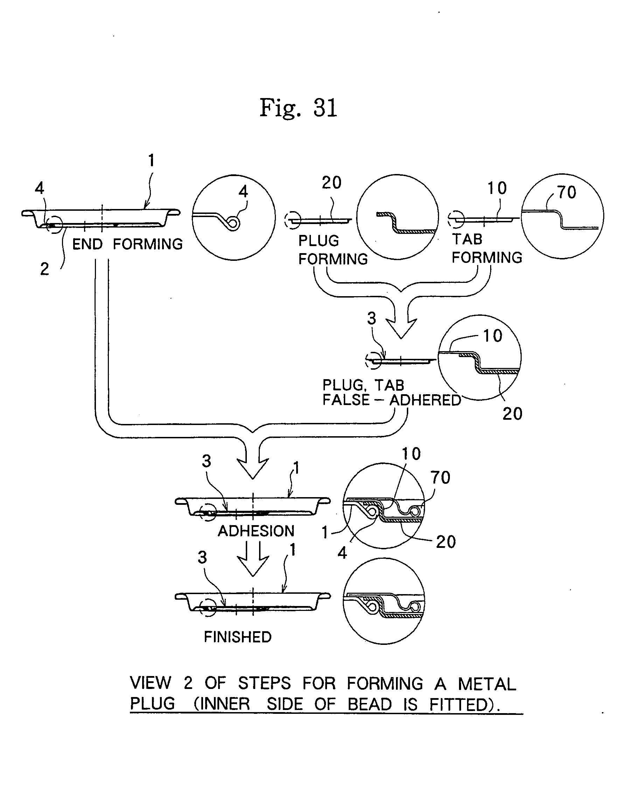

Fig. 31 is a diagram of assembling steps illustrating a yet further method of producing the metal plug container closure according to the same embodiment as that of Fig. 30. According to this method, however, among the edge 4 of the opening of the closure member 1, plug member 20 and flexible tab member 10, the plug member 20 and the flexible tab member 10 are, first, false-adhered together. Thereafter, the plug member 20 and the flexible tab member 10 false-adhered together, are adhered together and are, further, adhered to the closure member 1 to obtain a finished product.

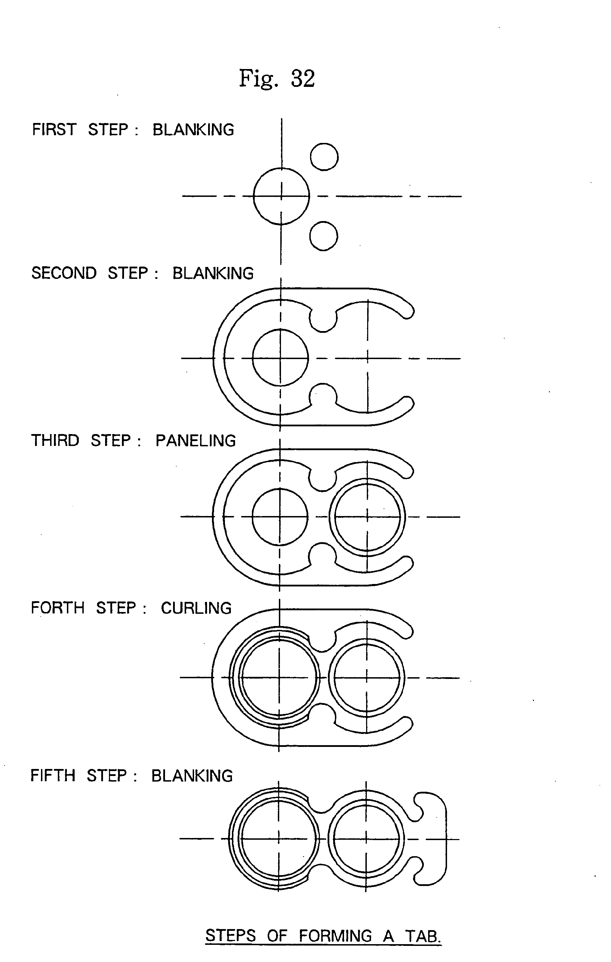

To form the flexible tab member of the unsealing tab of the invention from the blank sheet such as a laminated sheet, further, the blank sheet is successively treated through a first step (blanking: punching), a second step (blanking: cutting forward), a third step (paneling: expansion), a fourth step (curling: bending and contraction) and a fifth step (blanking: cutting) as shown in, for example, Fig. 32 (diagram illustrating the steps of producing a flexible tab member).

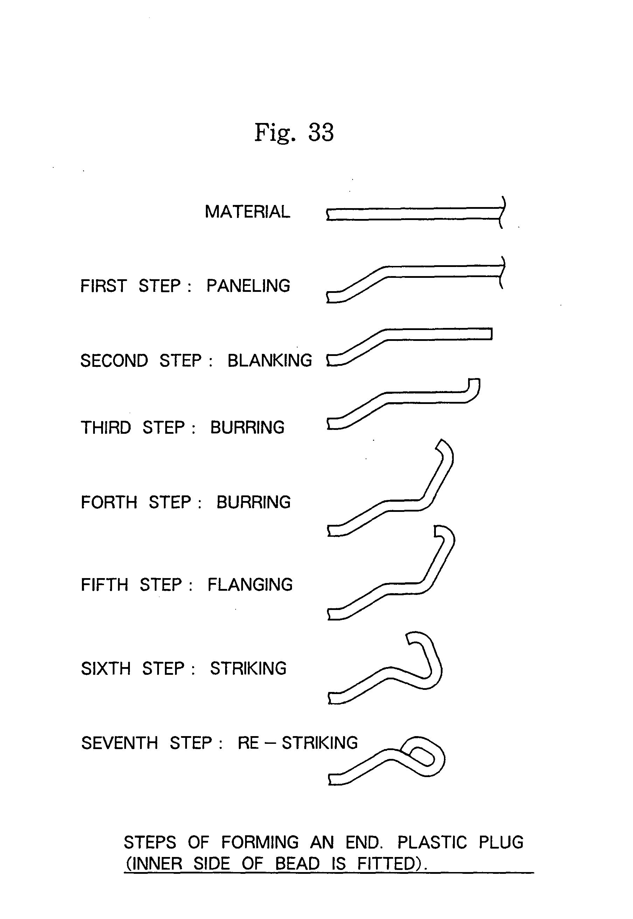

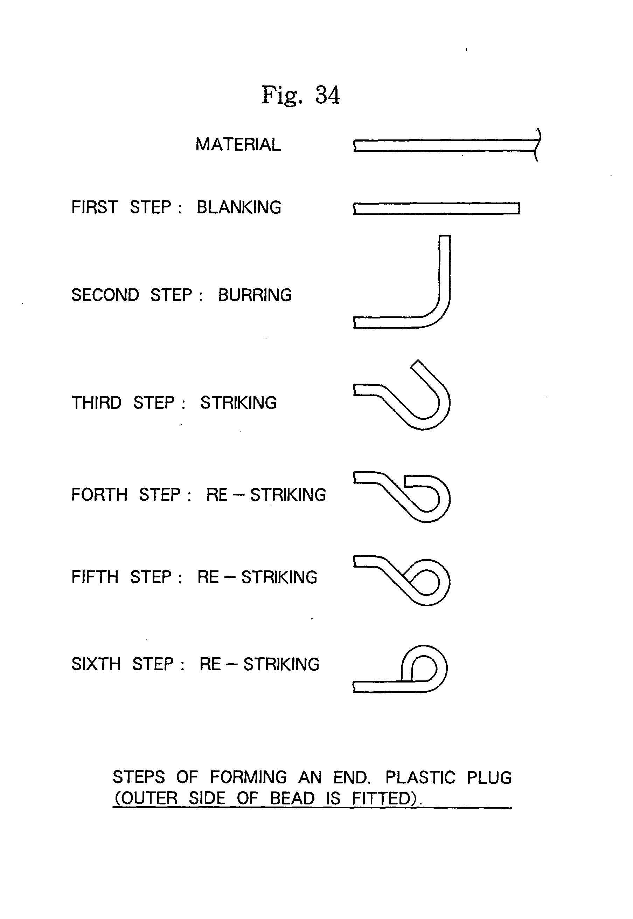

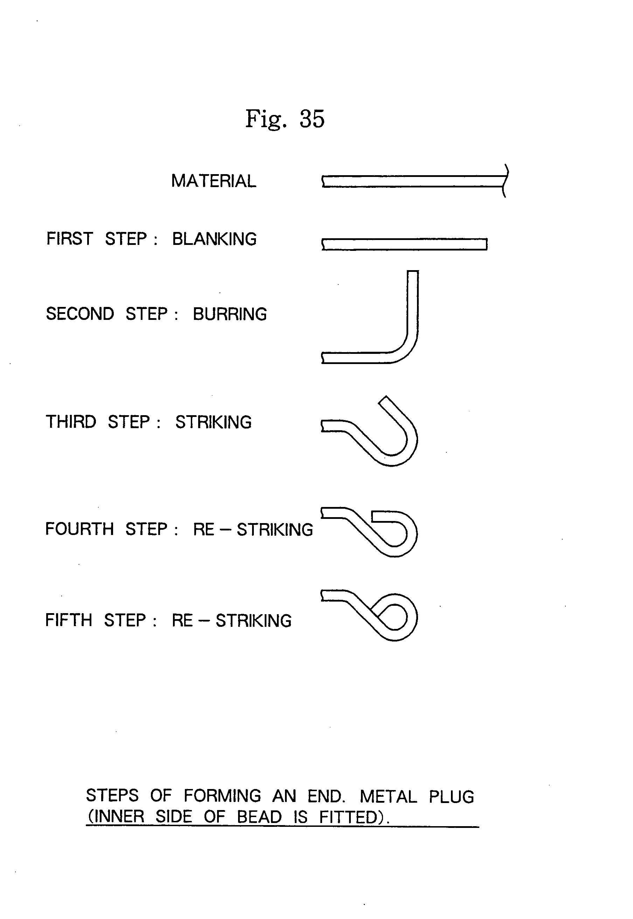

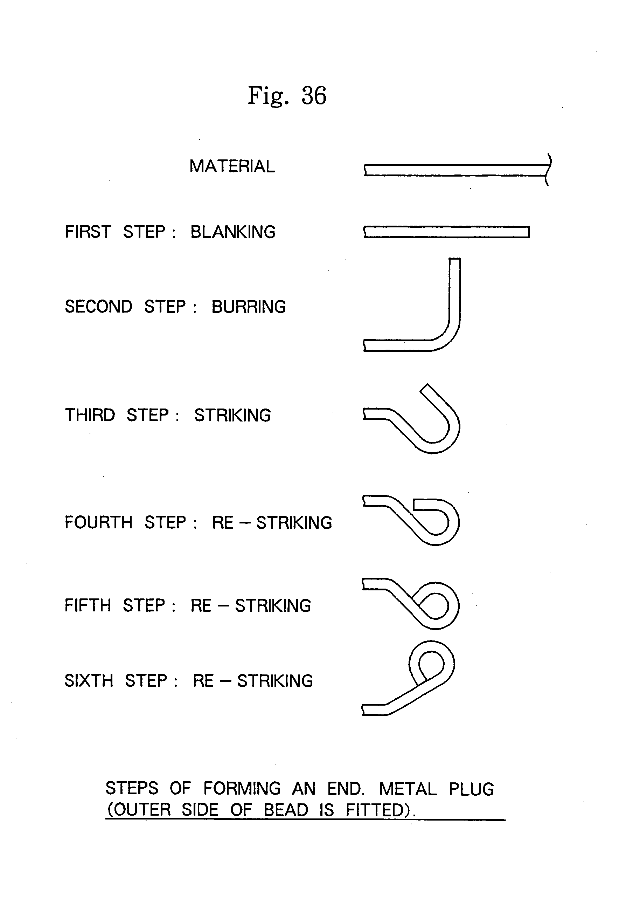

Fig. 33 illustrates a preferred embodiment of the steps for folding the curved shape of the edge of the opening of the closure member that fits to the plug member in the case of the container closure of Fig. 5 using the plastic plug member and having the fit-sealing surface that is directed toward the center of the closure. Fig. 34 illustrates the steps in the case of the container closure of Fig. 6 using the plastic plug member and having the fit-sealing surface that is directed toward the outer peripheral edge of the closure. Fig. 35 illustrates the steps in the case of the container closure of Fig. 7 using the metal plug member and having the fit-sealing surface that is directed toward the center of the closure, and Fig. 36 illustrates the steps in the case of the container closure of Fig. 8 using the metal plug member and having the fit-sealing surface that is directed toward the outer peripheral edge of the closure.

## Claims

1. An easily unsealable container closure having re-sealing performance and comprising a closure member having an opening portion that has been formed in advance, and an unsealing tab which is so fitted to the outer surface side of said closure member as to cover said opening portion and is hermetically adhered to the periphery of the opening portion, wherein said unsealing tab includes a flexible tab member and a plug member integrally adhered to said tab member and is so formed as to be fitted to the opening portion of said closure member, and said flexible tab member is hermetically fixed to the periphery of the opening portion in said closure member so as to be torn off.

2. A container closure according to claim 1, wherein the edge of said opening portion is treated by being folded or curled toward the outer side of the closure or by being coated with a coating material or a resin.

3. A container closure according to claim 1, wherein said flexible tab member comprises a laminate obtained by forming a resin film on both surfaces of a metal foil.

4. A container closure according to claim 3, wherein said laminate comprises a biaxially drawn polyethylene terephthalate layer/an aluminum layer/a sealant film, the layers being dry-laminated by using an urethane adhesive.

5. A container closure according to claim 1, wherein said closure member is made of a metal member having double seamed portions along the peripheral edge thereof.

6. A container closure according to claim 1, wherein the outer surface side of said closure member can be at least heat-adhered to said flexible tab member, but the inner surface side thereof adheres to neither the flexible tab member nor to the plug member.

7. A container closure according to claim 1, wherein not only said flexible tab member but also the plug member are adhered to the periphery of the opening of said closure member.

8. A container closure according to claim 1, wherein said unsealing tab has a portion firmly adhered to the closure member in a manner that it can be torn off with difficulty at a position on the side opposite to the unsealing start end with said opening portion held therebetween, and the unsealing tab is not torn off from the closure member even after the unsealing.

9. A container closure according to claim 8, wherein said unsealing tab is cut away at a portion just before the portion that is firmly adhered to said closure member from both sides thereof in a direction nearly at right angles with the tearing direction to assume such a shape that the tab width is narrowed at the above portion.

10. A container closure according to claim 1, wherein said flexible tab member is adhered and fixed to the outer surface side of said closure member, and includes a sealing portion to which the plug member is adhered integrally together and a folding portion continuing to the sealing portion at a sealing start end of said sealing portion, said folding portion having a grip portion for unsealing and being fixed to the sealing portion or to the closure member before being unsealed.

11. A container closure according to claim 10, wherein said folding portion is adhered and fixed to the sealing portion or to the outer surface of the closure member except at least said grip portion and, after unsealed, the folding portion is prevented from being fixed again to the sealing portion or to the closure member.

12. A container closure according to claim 11, wherein said folding portion that is adhered and fixed to the sealing portion or to the outer surface of the closure member is torn off thereby to tear off part of the folding portion or the sealing portion.

13. A container closure according to claim 11, wherein said flexible tab member has an adhesive layer formed on the surface thereof on the side that is adhered to the closure member, and the end of the folding portion is folded or curled toward the side of the closure member so as to be adhered and fixed.

14. A container closure according to claim 1, wherein said flexible tab member is adhered and fixed to the closure member, and the end of the periphery of the opening portion is folded toward the side of the closure member.

15. A container closure according to claim 14, wherein said flexible tab member has an adhesive layer formed on only the surface thereof that comes in contact with the closure member.

16. A container closure according to claim 10, wherein a vent hole is formed in advance in said closure member, said folding portion is adhered and fixed to the outer surface side of the closure member so as to seal at least said vent hole, and when said folding portion is torn off from the side of the outer surface of the closure member, the vent hole is opened earlier than the opening portion.

17. A container closure according to claim 10, wherein the adhesion between the sealing portion and the closure member are torn off or are weakened near both ends of the folding line which is a boundary line between the sealing portion and the folding portion of said flexible tab member prior to pulling said plug member from the opening portion.

18. A container closure according to claim 17, wherein said flexible tab member has the sealing portion and the folding portion that are adhered and fixed together near both ends of the folding line.

19. A container closure according to claim 1, wherein said plug member is a plastic plug member formed by the injection forming or the compression forming, or is a metal plug member formed by the press forming.

20. A container closure according to claim 19, wherein said plastic plug member is made of a resin composition of an olefin resin and at least the one selected from a thermoplastic elastomer and a rubbery composition, having a heptane elution amount at 25°C of not larger than 150 ppm, a deformation ratio (JIS K 6723) at 100°C of smaller than 30%, and a compressive permanent strain (JIS K 6262) at 70°C of in a range of 50 to 95%.

21. A container closure according to claim 20, wherein the olefin resin component in the resin composition constituting said plug member is at least the one selected from the copolymerized resin obtained by copolymerizing a polyethylene resin, a polypropylene resin and an ethylene or a propylene with a small amount of other olefin.

22. A container closure according to claim 20, wherein the thermoplastic elastomer component and the rubbery composition component in the resin composition constituting said plug member are blended compositions of one or two or more kinds of those selected from an ethylene/α-olefin copolymer rubber, ethylene/propylene/diene copolymer rubber, ethylene/vinyl acetate copolymer rubber, acid-modified ethylene/vinyl acetate copolymer rubber, styrene/isoprene block copolymer rubber, styrene/butadiene/styrene block copolymer rubber, styrene/ethylene/butylene/styrene block copolymer rubber, styrene/ethylene/propylene/styrene block copolymer rubber, hydrogenated styrene/butadiene/styrene block copolymer rubber, hydrogenated styrene/ethylene/butylene/styrene block copolymer rubber, hydrogenated styrene/ethylene/butylene/styrene block copolymer rubber, hydrogenated styrene/ethylene/propylene/styrene block copolymer rubber, silicon rubber, silane-crosslinked polyethylene, silane-crosslinked polypropylene, and silicane-crosslinked ethylene/vinyl acetate copolymer rubber.

23. A container closure according to claim 20, wherein the α-olefin component in said ethylene/α-olefin copolymer rubber is at least the one selected from propylene, 1-butene, 1-pentene, 1-hexene, 1-heptene, 1-octene, 1-nonene, 1-decene, 1-undecene and 1-dodecene.

24. A container closure according to claim 20, wherein said plug member is a resin composition obtained by mixing three kinds of polymers which are a polyethylene resin or a polypropylene resin, an ethylene/α-olefin copolymer rubber and a styrene/ethylene/butylene/styrene block copolymer rubber or a hydrogenated product thereof or a styrene/ethylene/propylene/styrene block copolymer rubber or a hydrogenated product thereof.

25. A container closure according to claim 20, wherein the hardness at normal temperature of the resin composition constituting said plug member is in a range of 80 to 95 as measured by using a type-A durometer indentater and is in a range of 50 to 75 as measured by using a type-D durometer indentater in compliance with a cured rubber permanent strain testing method (JIS K 6262).

26. A method of producing an easily unsealable container closure comprising the steps of treating an edge of an opening of a closure member having the opening portion that has been formed in advance, forming an unsealing tab by integrating a flexible tab member and a plug member together, and adhering the flexible tab member to the outer surface of the closure member in the periphery of the opening by applying said unsealing tab onto the surface that becomes the outer surface side of the closure member.

27. A production method according to claim 26, wherein said unsealing tab is formed by integrally forming the plug member by the injection forming or by the compression forming on the flexible tab member.

28. A method of producing an easily unsealable container closure comprising the steps of treating an edge of an opening of a closure member having the opening portion that has been formed in advance, forming,a flexible tab member and a plug member, and placing said flexible tab member and the plug member on the outer surface of the closure member such that the plug member is fitted to the opening of the closure member and the flexible tab member covers the plug member, enabling the flexible tab member and the plug member to be integrally adhered together thereby to form an unsealing tab and, at the same time, adhering the flexible tab member to the outer surface of the closure member.
